# EUROPEAN PATENT SPECIFICATION

(11) **EP 3 420 464 B1**
(45) Date of publication and mention of the grant of the patent: **01.12.2021**
(21) Application number: 17757034.8
(22) Date of filing: 17.02.2017
(51) Int. Cl.: G06F 15/173, H04L 12/66, H04M 7/00, H04M 11/00, H04M 11/06, H04W 4/18, H04L 29/06

(54) **INITIATION OF CONFERENCE AND TRANSFER CALL IN INTERNET PROTOCOL MULTIMEDIA SUBSYSTEM BASED EMERGENCY SERVICES NETWORK**
EINLEITUNG EINER KONFERENZ UND TRANSFER EINES ANRUFS IN EINEM NOTDIENSTNETZWERK AUF BASIS EINES INTERNETPROTOKOLL-MULTIMEDIA-SUBSYSTEMS
INITIATION DE CONFÉRENCE TÉLÉPHONIQUE ET TRANSFERT D'APPEL DANS UN RÉSEAU DE SERVICES D'URGENCE BASÉ SUR UN SOUS-SYSTÈME MULTIMÉDIA À PROTOCOLE INTERNET

(30) Priority: 24.02.2016 US 201662299197 P
(43) Date of publication of application: 02.01.2019
(73) Proprietor: Nokia Solutions and Networks Oy, 02610 Espoo (FI)
(72) Inventor: RAO, Nagaraja, Boca Raton, FL 33496-6504 (US); SHAH, Ejaz, Algonquin, IL 60102 (US); JONG-A-KIEM, Raymond, Lewisville, TX 75056 (US)
(74) Representative: Novagraaf Technologies
(86) International application number: PCT/US2017/018382
(87) International publication number: WO 2017/147014

(56) References cited:
- WO-A1-2015/066897
- US-A1- 2006 291 489
- US-A1- 2008 123 821
- US-A1- 2008 123 821
- US-A1- 2009 168 974
- US-A1- 2010 098 093
- US-A1- 2010 166 154
- US-A1- 2015 029 941
- US-B2- 8 363 664
- US-B2- 9 008 612
- US-B2- 9 154 562
- US-B2- 9 225 938

## Description

### CROSS-REFERENCE TO RELATED APPLICATION:

This application is related to and claims the benefit and priority of U.S. Provisional Patent Application No. 62/299,197, filed February 24, 2016.

### BACKGROUND:

### Field:

Various communication systems may benefit from the appropriate mechanisms for call handling. For example, certain internet protocol (IP) multimedia subsystem (IMS) based emergency services networks may benefit from appropriate initiation of conference calls and of handling of transfers of such calls.

### Description of the Related Art:

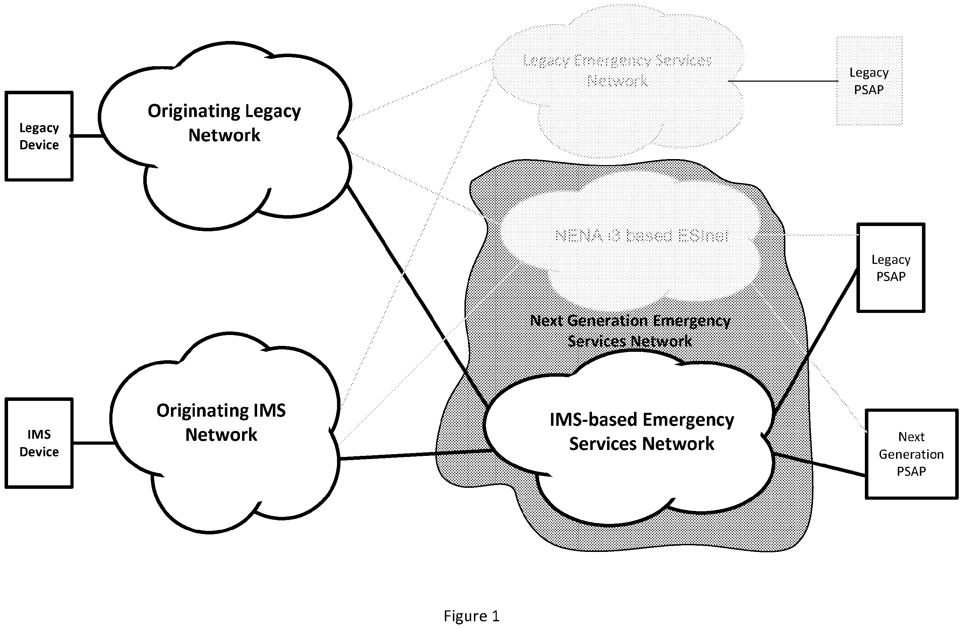

Figure 1 illustrates emergency call handling options. This discussion focuses on emergency call handling systems that focus on IMS-based networks deployed in North America, although it should be understood that the discussion is applicable to other systems.

Figure 1 gives an overview of a few options available in reference to the emergency call handling systems in deployed in North America. As shown in Figure 1, an emergency call may be originated from a legacy network or from an IMS network. The emergency calls are routed based on the caller's location and may be destined to a legacy public safety answering point (PSAP) or to a next generation PSAP. The emergency calls to the next generation PSAP are routed via a next generation emergency services network which is until now based on NENA i3 based ESInet. ATIS is currently involved in a project to develop an IMS-based emergency services network.

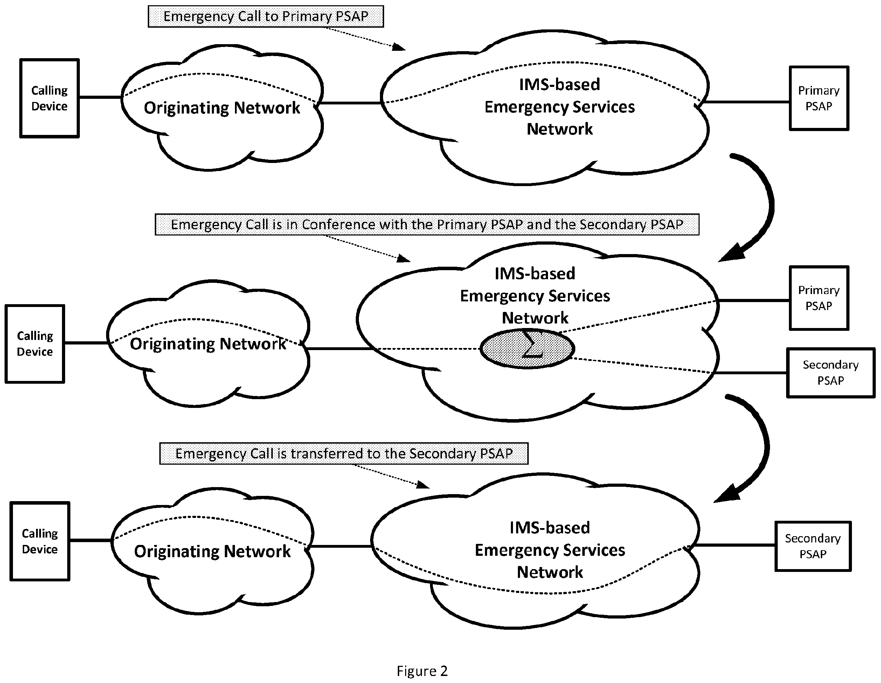

Figure 2 illustrates conferencing and call transfer of an emergency call. ATIS work related to IMS-based emergency services networks involves developing an architecture and concepts for this IMS-based emergency services network. ATIS is trying to enhance the functionalities of IMS-based emergency services network, by introducing the capabilities that would allow a PSAP (referred to as Primary PSAP in Figure 2) to conference the incoming emergency call with another PSAP (referred to as Secondary PSAP in Figure 2) and then transfer the emergency call to the Secondary PSAP.

The Secondary PSAP may do the same thing that the Primary PSAP has done. For example, the Secondary PSAP may conference the emergency call with another PSAP and then do the transfer.

The IMS-based systems along with the conferencing capabilities are defined in 3GPP specifications (3GPP TS 23.228, 3GPP TS 23.218, 3GPP TS 24.249, and 3GPP TS 24.147, each of which is hereby incorporated herein by reference). Those specifications do not define a method that would allow an IMS-based emergency services network to support the above-indicated conferencing and the call transfer.

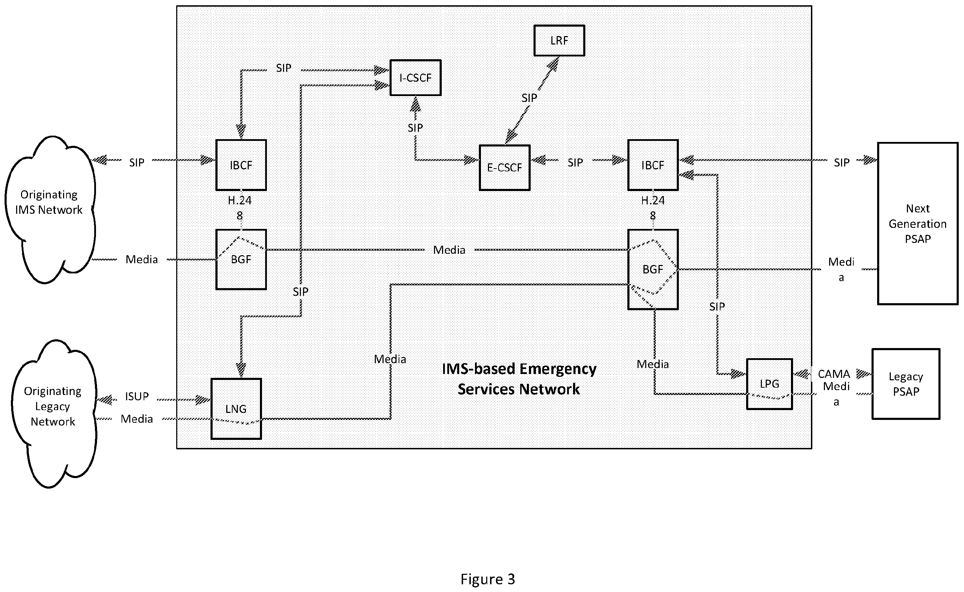

Figure 3 illustrates overview call routing concepts within an IMS-based emergency services network. Thus, Figure 3 shows an example of emergency call routing concepts within the IMS-based emergency services network as per the architecture and concepts developed within ATIS.

As shown in Figure 3, an emergency call from an originating IMS network enters the IMS-based emergency services network at the IBCF/BGF and exits to a next generation PSAP via another IBCF/BGF and to a legacy PSAP via LPG.

Similarly, as shown in Figure 3, an emergency call from an originating legacy network enters the IMS-based emergency services network at the LNG and exits to a next generation PSAP via another IBCF/BGF and to a legacy PSAP via LPG.

In 3GPP IMS specifications, the term Transit Gateway (TrGW) is used instead of Border Gateway function (BGF). The term BGF is used as equivalent to a TrGW, although possibly encompassing additional structures and functions, as discussed below.

Within the IMS-based emergency services network, the emergency call is routed to an interrogating call state control function (I-CSCF). The I-CSCF forwards the call to an emergency call state control function (E-CSCF). The E-CSCF interacts with the LRF to determine the PSAP to serve the call. Upon receiving the PSAP information from the LRF, the E-CSCF routes the call to next generation PSAP or to a legacy PSAP. The I-CSCF does not stay on the call path. The E-CSCF stays on the call path as the only network entity within the IMS-based emergency services network, other than the border network elements.

For conferencing and call transfer, the architecture and concepts considered within the ATIS project assume that the conferencing is done using MRFC/MRFP defined in the 3GPP TS 24.147. The media from the Ingress BGF is diverted to an MRFP and then to the Primary and to the Secondary PSAP.

This architecture considered in the ATIS project does not preserve the E-CSCF after the initial call transfer. An abstract level view can help to illustrate this.

Figure 4 illustrates the topology of a call path before call transfer. For illustration purpose, the legacy PSAP has been omitted. Even the calls to Legacy PSAP go through the Egress IBCF/BGF as shown in Figure 3.

SIP (1) and Media Path (1) show the SIP signaling path and the media path of the emergency call before the transfer. The call enters the IMS-based emergency network via Ingress IBCF/BGF or LNG and leaves the network via Egress IBCF/BGF to the Primary PSAP.

Figure 5 illustrates topology of a call path to primary PSAP through a conference. As a part of conference invocation, the emergency call from the originating network to Primary PSAP is redirected to the conference as shown in Figure 5.

SIP (3) and Media Path (3) show the SIP signaling path and the media path of the original call leg redirected to the conference, thus replacing the SIP (1) and Media Path (1). SIP (2) and Media Path (2) show the SIP signaling and media path of the Primary PSAP connection to the conference.

Media Path (1) from Ingress BGF or LNG to the Primary PSAP through the Egress BGF is released since it is replaced by the Media Path (3) and Media Path (2). The associated SIP signaling SIP (1) from the Ingress IBCF or LNG to the Primary PSAP through the E-CSCF and Egress IBCF is also released since it is replaced by SIP (3) and SIP (2).

The only network entity other than the border network elements involved in the original call path before the conference is now gone.

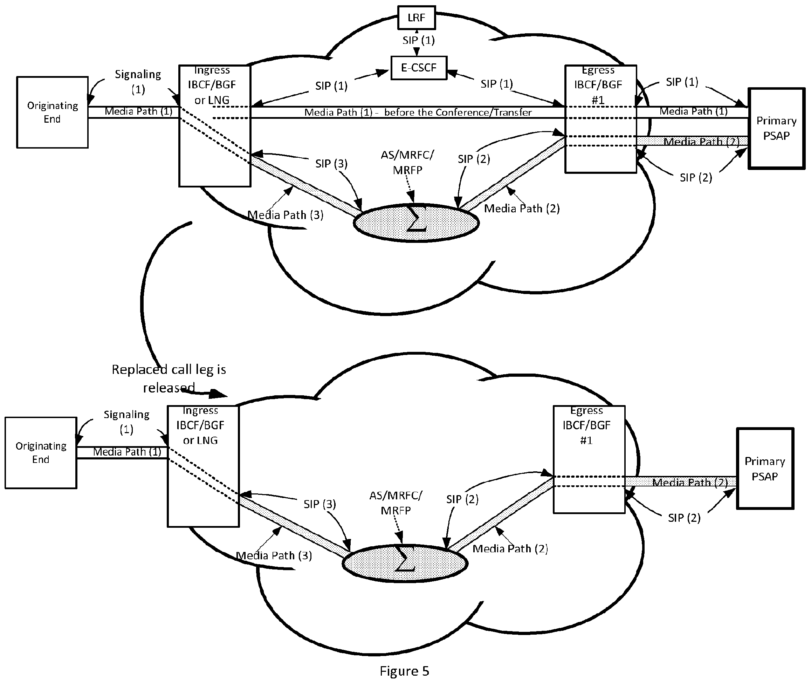

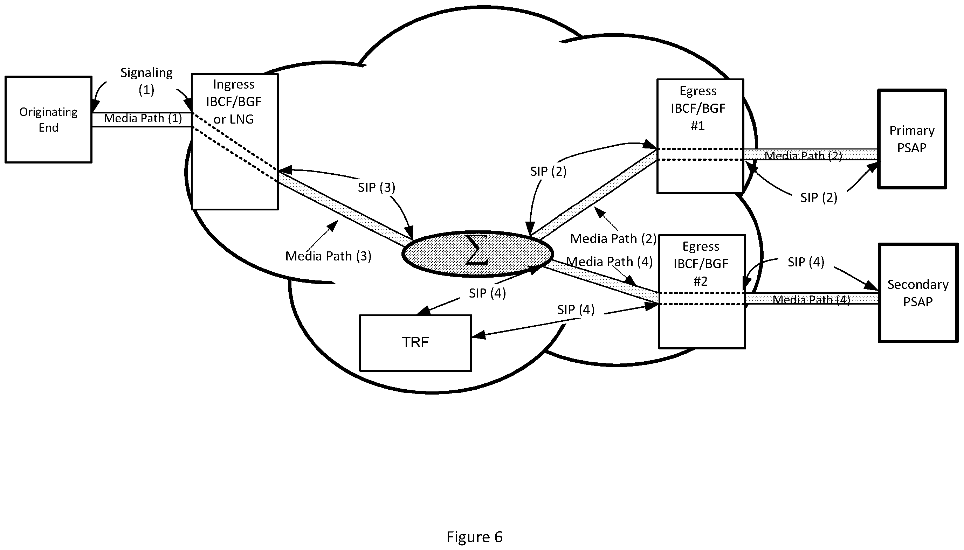

Figure 6 illustrates the topology of the call path during the conference. As indicated earlier in reference to the Figure 5, SIP (3) and Media Path (3) show the SIP signaling path and the Media Path of the original call leg redirected to the conference, thus replacing the SIP (1) and Media Path (1). SIP (2) and Media Path (2) show the SIP signaling and Media path of the Primary PSAP connection to the conference. SIP (4) and Media Path (4) show the SIP signaling path and the media path for the call from conference to the Secondary PSAP.

The architecture and concepts presented in the ATIS project do not show the use of a Transit and Roaming Function (TRF). However, in order to make the call routing possible, a TRF may be required and hence, it is illustrated here.

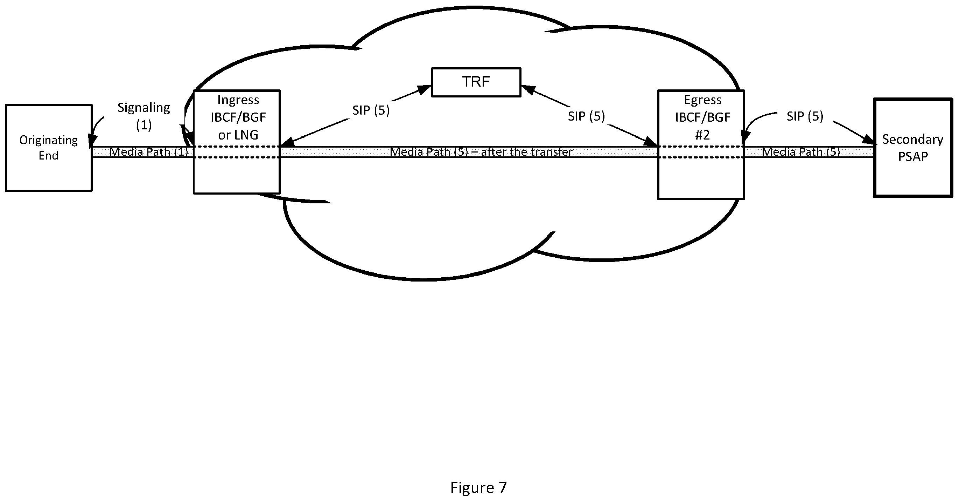

Figure 7 illustrates the topology of the call path after the call transfer. SIP (5) and Media Path (5) show the SIP signaling path and the media path of the post transfer call leg to the Secondary PSAP. The call enters the IMS-based emergency services network through the Ingress IBCF/BGF or LNG and leaves the network through the Egress IBCF/BGF #2.

As shown in Figure 7 the main network node of IMS-based emergency services network (i.e., the E-CSCF) is not on the call path after the call transfer. As indicated earlier, the architecture and concepts presented in ATIS project do not show the TRF.

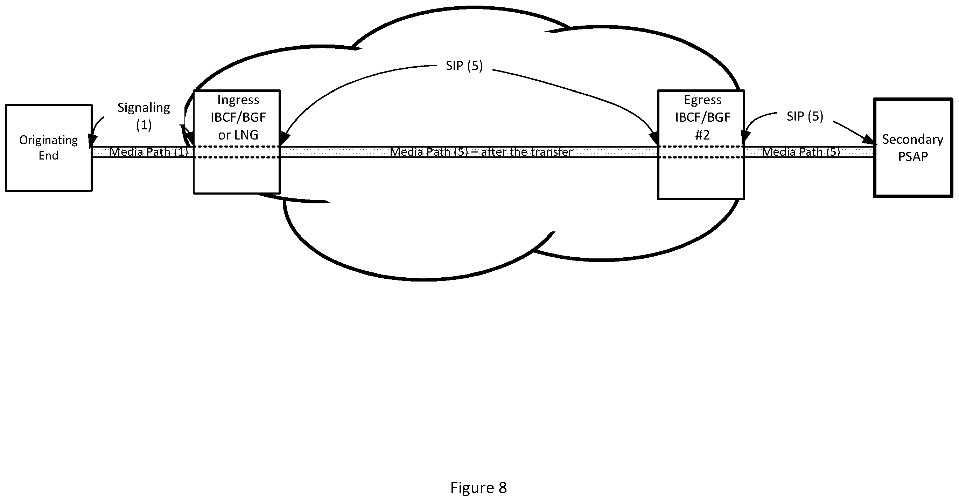

Figure 8 illustrates the topology of a call path after the call transfer. More particularly, Figure 8 shows such a topology as per the current ATIS architecture and concepts. SIP (5) and Media Path (5) show the SIP signaling path and the media path of the post transfer call leg to the Secondary PSAP. The call enters the IMS-based Emergency Services Network through the Ingress IBCF/BGF or LNG and leaves the network through the Egress IBCF/BGF #2.

3GPP TS 23.167 that defines the E-CSCF, expects the E-CSCF to stay on the call path to the end of the call. Moreover, 3GPP TS 23.167 specifies that the generation of call records is one of the functions of E-CSCF.

The E-CSCF is expected to notify the LRF about the status of the call. If E-CSCF is not on the call path, then perhaps LRF will release its resources when SIP (1) is released. ATIS is currently considering modifying the requirements by eliminating the need to have E-CSCF on the call path.

If E-CSCF need not be present on the call, then one could question the role played by an IMS-based emergency network in this emergency call once the call is setup. As shown in Figure 8, the call is entering through the Ingress IBCF/BGF or LNG and then leaving via the Egress IBCF/BGF #1.

The common IMS architecture is defined in 3GPP TS 23.228 (stage 2) and TS 24.229 (stage 3), each of which is hereby incorporated herein by reference. The IMS conferencing functions are defined in 3GPP TS 24.147, which is also hereby incorporated herein by reference. The ATIS project is currently developing a standard to define the IMS-based Emergency Services Network.

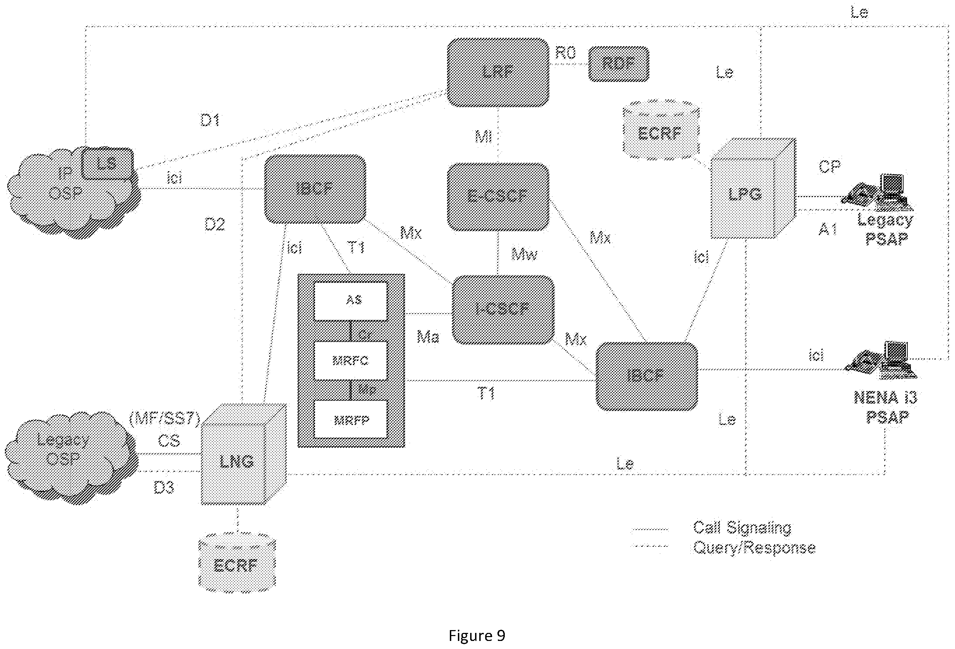

Figure 9 illustrates a network architecture defined in the latest ATIS Baseline. The source for this is an ATIS working document. Figure 3, discussed above, shows the call setup concept based on this architecture developed in ATIS.

The reference points T1 may be added between AS/MRFC to the IBCF to support the signalling interface after the initial call setup from IBCF to AS/MRFC through the I-CSCF. T1 may allow the AS/MRFC to setup a call to IBCF directly without the TRF.

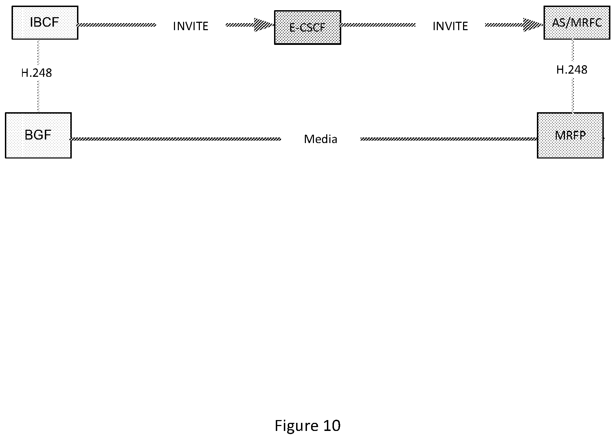

3GPP TS 24.147 defines how a conference can be done in an IMS-based network, but does not accommodate the conferencing option for the IMS-based emergency services network because here the main SIP serving node is E-CSCF. An interface from E-CSCF to the AS/MRFC is not defined/supported in 3GPP specifications. In other words, what is shown in Figure 10 is not possible.

Figure 10 illustrates that an E-CSCF to AS/MRFC interface is not defined. The E-CSCF is typically in the originating IMS network and options that would allow the emergency call originator to have a conference are not supported because they are not required.

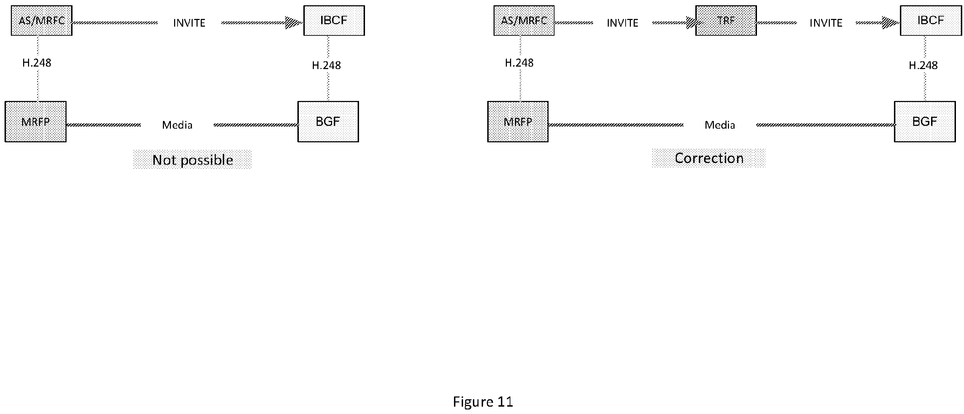

Figure 11 illustrates a proposed architecture to support a conference with a corresponding correction. The illustrated concepts at left assume the AS/MRFC can setup a call to another IBCF directly. This is not supported interface for the call setup based on the 3GPP IMS architecture. Instead, in the 3GPP IMS architecture, the call setup would need to go through a TRF as shown at right.

Thus, the left diagram in Figure 11 shows something proposed with a faulty assumption. By contrast, the right diagram shows the correction based on the 3GPP architecture.

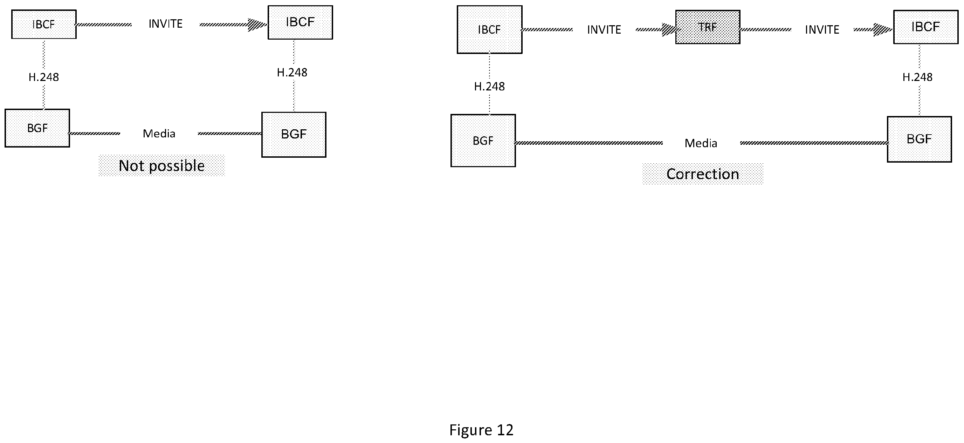

Figure 12 illustrates another proposed architecture to support a conference with a corresponding correction. The proposed architecture assumes that an IBCF can setup a call to another IBCF directly. This is not a supported interface for the call setup based on the 3GPP IMS architecture. Instead, the call setup should go through a TRF. Thus, the left diagram in Figure 12 shows what is considered a possibility in the ATIS project, and the right diagram shows the correction based on the 3GPP architecture.

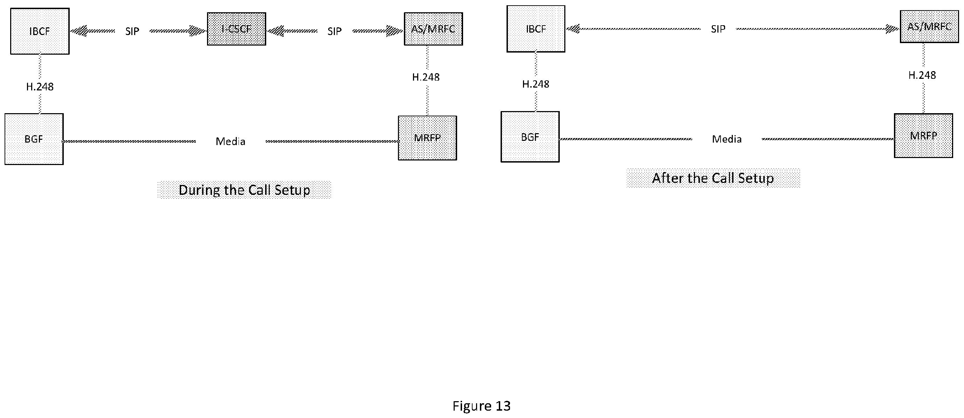

Figure 13 illustrates a change in topology between before and after call setup. A proposed approach assumes that the initial call setup from an IBCF to AS/MRFC can be done through an I-CSCF. As per the 3GPP standards, the I-CSCF does not stay on the call path after the initial call setup. Thus, the left diagram in Figure 13 shows the topology during the call setup and the right diagram shows the topology after the call setup.

As an alternate to what is shown in Figure 13, a call setup from an IBCF to AS/MRFC can also be done through a TRF.

Even if the corrections are applied to the prior art architecture in development at ATIS, the approach does not keep the E-CSCF on the call path.

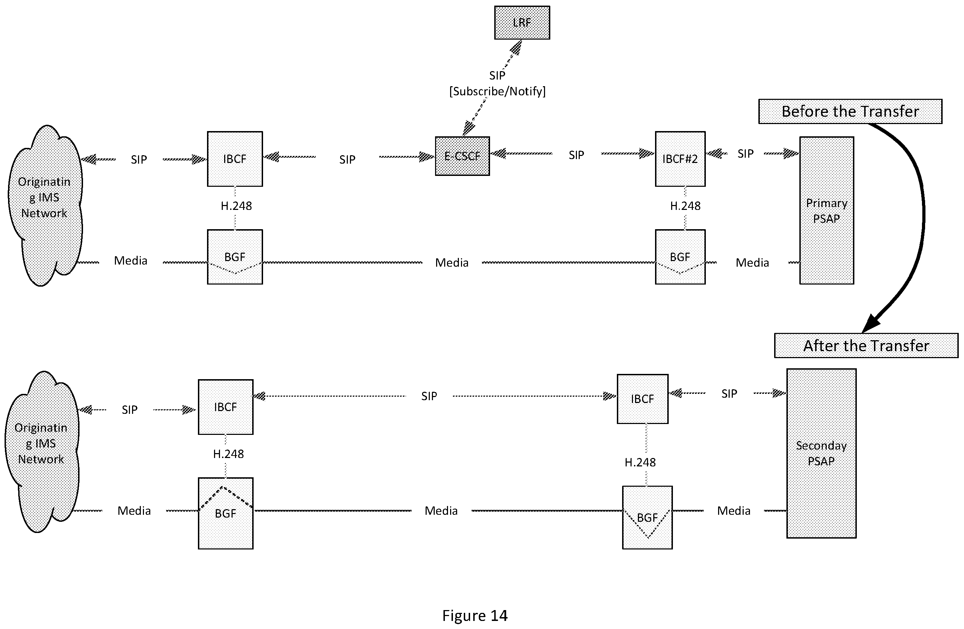

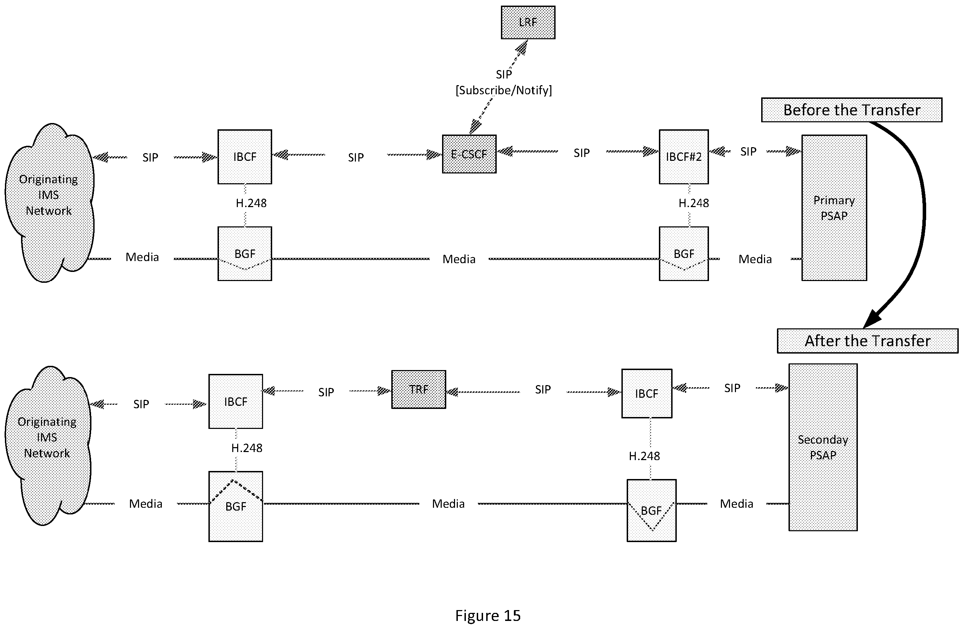

Figure 14 illustrates the call topology before and after the transfer according to the architecture and concepts developed in the ATIS project. By contrast, Figure 15 illustrates the call topology before and after the transfer with corrections applied to the architecture and concepts developed in the ATIS project.

As can be seen in Figure 14 and Figure 15, the E-CSCF does not exist within the call path after the call transfer. The illustrations discussed above were shown with the corrections applied as one can see in Figure 6 and Figure 7.

Prior art WO 2015/066897 A1 shows establishing a conference call between two terminals that are already in an ongoing call session, and then making an emergency call in the established conference call to add an emergency center in the conference call.

US 2008/123821 A1 shows a scenario wherein if an emergency call is terminated prematurely, the invention can trigger to initiate a call return to the original calling party and to reconnect the Public Safety Answering Point (PSAP).

### SUMMARY:

According to a first embodiment, a method is defined according to the independent claim 1.

In a variant, the establishing the conference call can include replacing a path to a primary public safety answer point with a path passing through the egress node and the conference node.

In a variant, the ingress node can include an interconnect border control function, border gateway function, or legacy network gateway.

In a variant, the egress node can include an interconnect border control function or border gateway function.

In a variant, the conference node can include at least one of an application server, a multimedia resource function controller, or a multimedia resource function processor.

According to a second embodiment, a system is defined according to the independent claim 6 and includes means for performing the method according to the first embodiment, in any of its variants.

According to a third embodiment, a computer program product is defined according to the independent claim 11 and encodes instructions for performing a process including the method according to the first embodiment, in any of its variants.

### BRIEF DESCRIPTION OF THE DRAWINGS:

For proper understanding of the invention, reference should be made to the accompanying drawings, wherein:
Figure 1 illustrates emergency call handling options.
Figure 2 illustrates conferencing and call transfer of an emergency call.
Figure 3 illustrates overview call routing concepts within an IMS-based emergency services network.

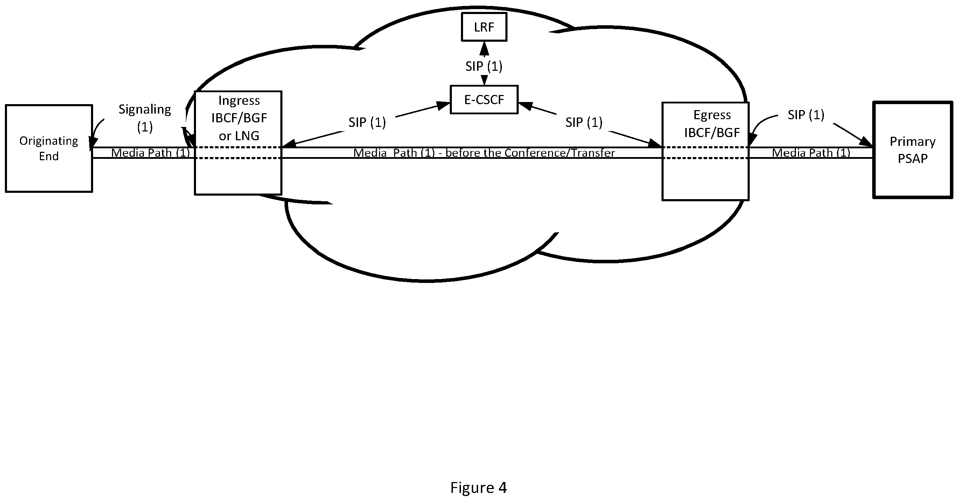

Figure 4 illustrates the topology of a call path before call transfer.
Figure 5 illustrates topology of a call path to primary PSAP through a conference.
Figure 6 illustrates the topology of the call path during the conference.
Figure 7 illustrates the topology of the call path after the call transfer.
Figure 8 illustrates the topology of a call path after the call transfer.
Figure 9 illustrates a network architecture defined in the latest ATIS Baseline.
Figure 10 illustrates that an E-CSCF to AS/MRFC interface is not defined.
Figure 11 illustrates a proposed architecture to support a conference with a corresponding correction.
Figure 12 illustrates another proposed architecture to support a conference with a corresponding correction.
Figure 13 illustrates a change in topology between before and after call setup.
Figure 14 illustrates the call topology before and after the transfer according to the architecture and concepts developed in the ATIS project.
Figure 15 illustrates the call topology before and after the transfer with corrections applied.

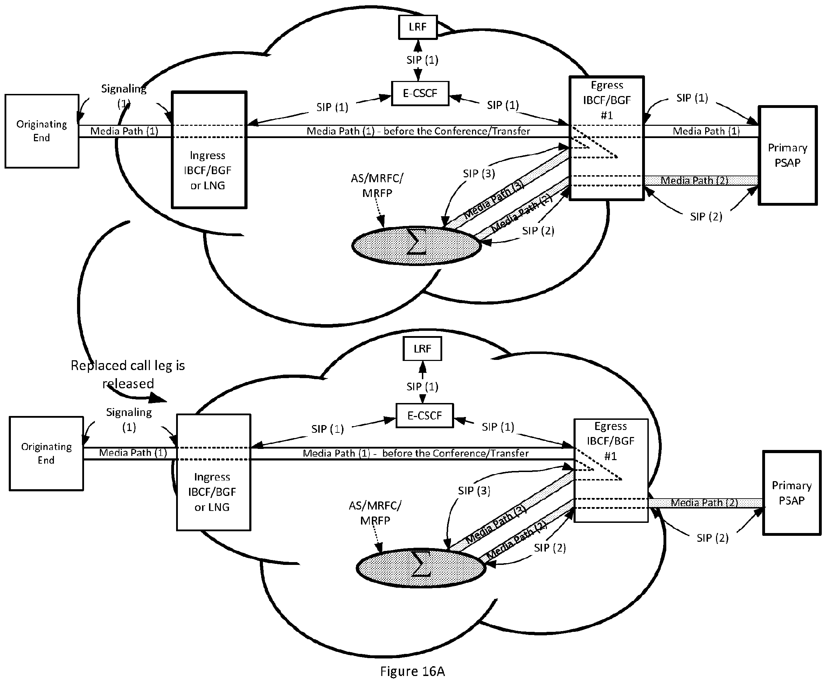

Figure 16A illustrates a topology of signaling and media paths when the Primary PSAP is connected to the original call through the conference, according to certain embodiments.

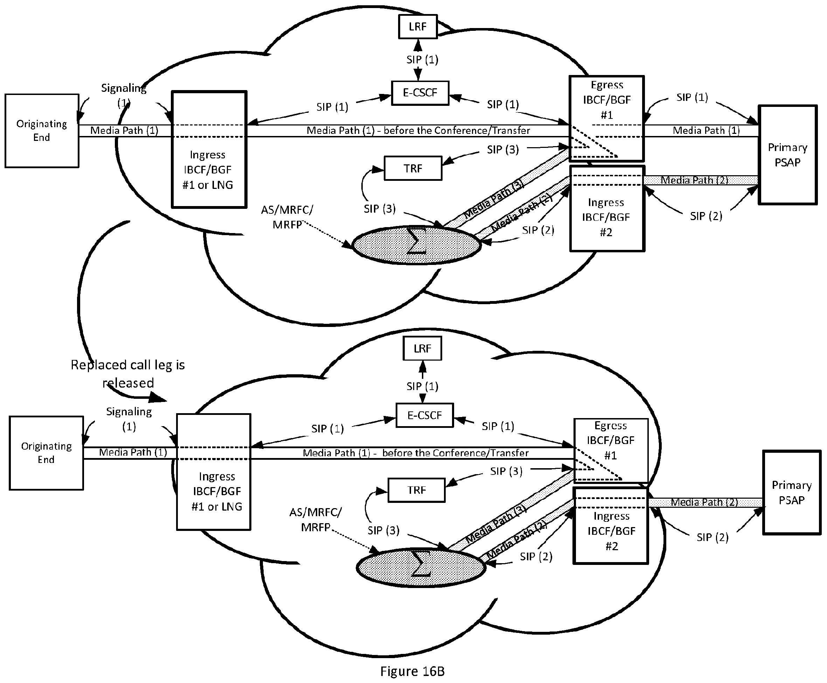

Figure 16B illustrates another topology of signaling and media paths when the Primary PSAP is connected to the original call through the conference, according to certain embodiments.

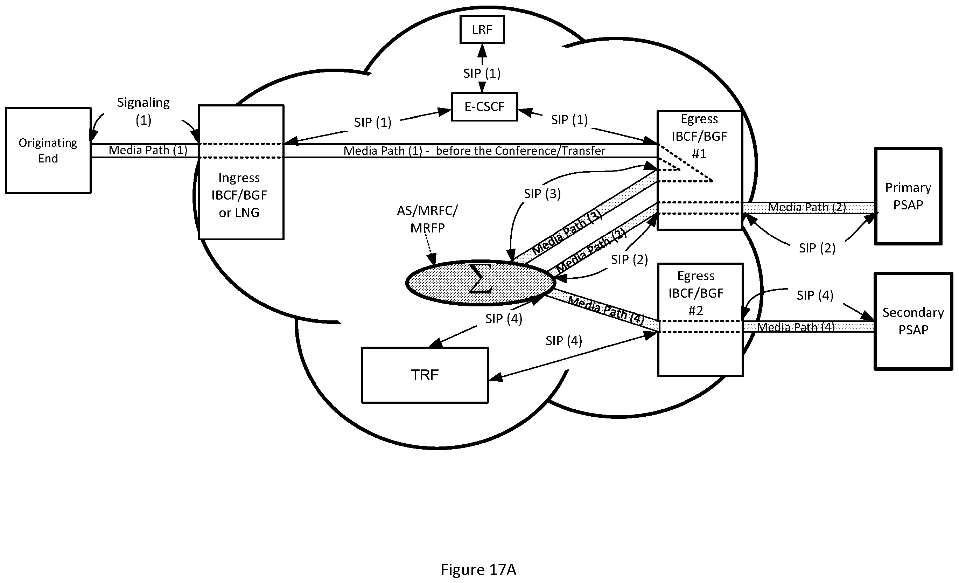

Figure 17A illustrates the topology of signaling and media path during the conference, according to certain embodiments.

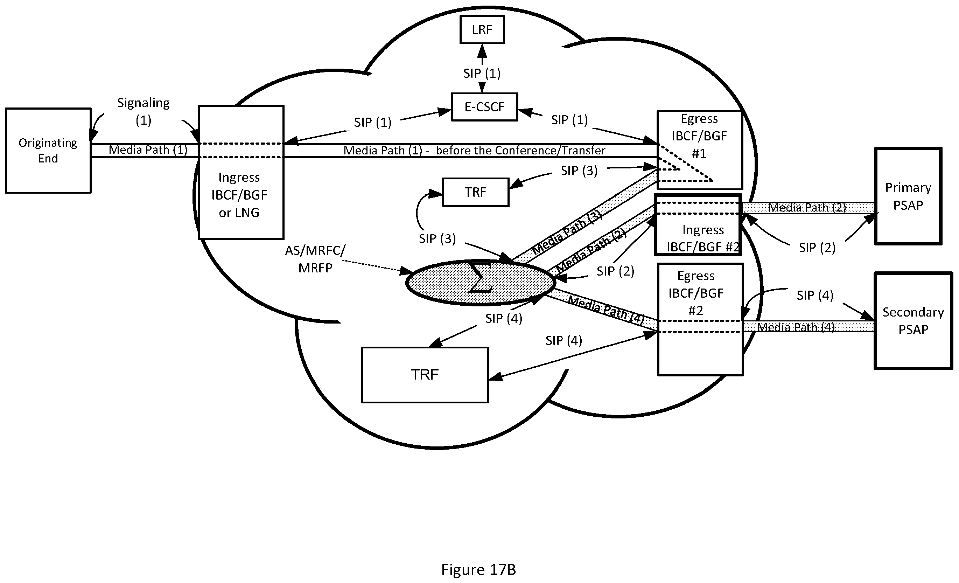

Figure 17B illustrates another topology of signaling and media path during the conference, according to certain embodiments.

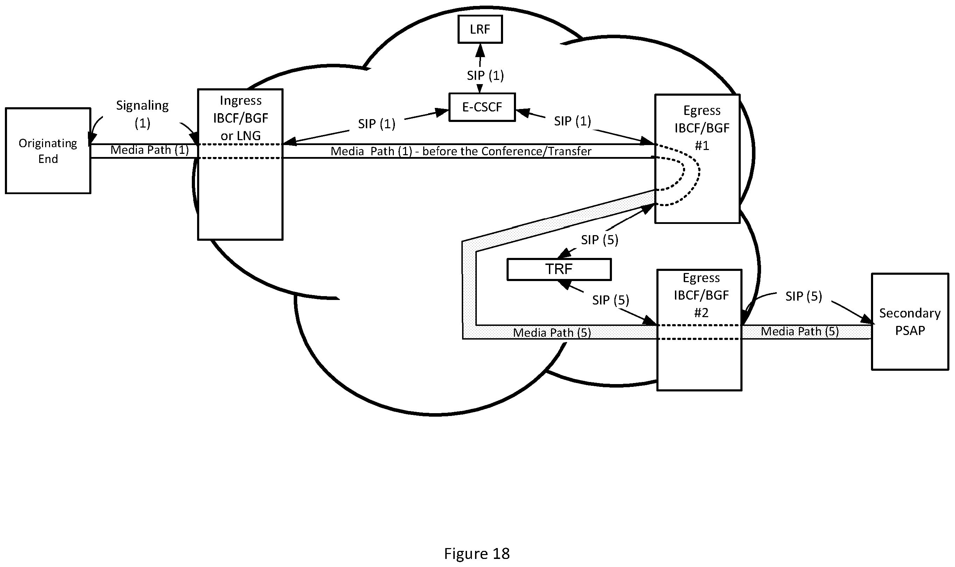

Figure 18 illustrates the topology of the signaling and media path after call transfer, according to certain embodiments.

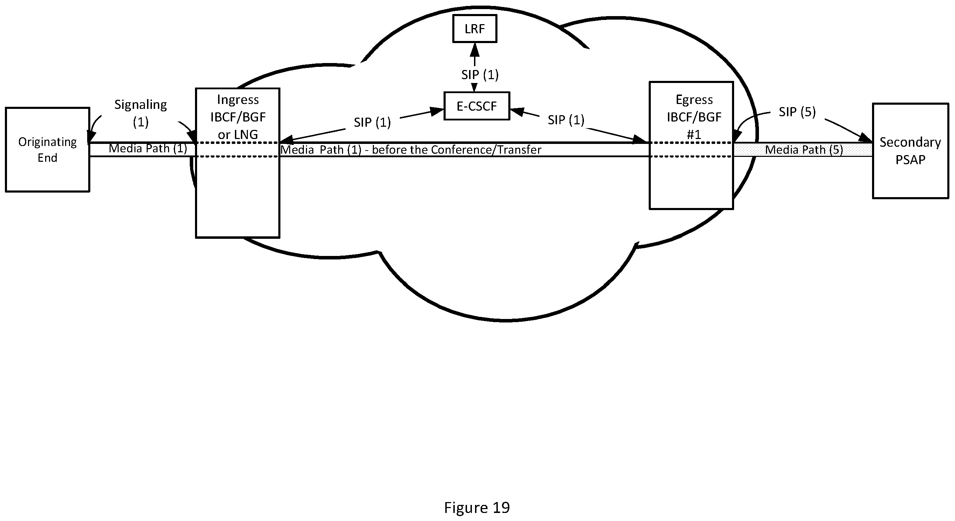

Figure 19 illustrates the topology of the signaling and media path after call transfer with a same egress node, according to certain embodiments.

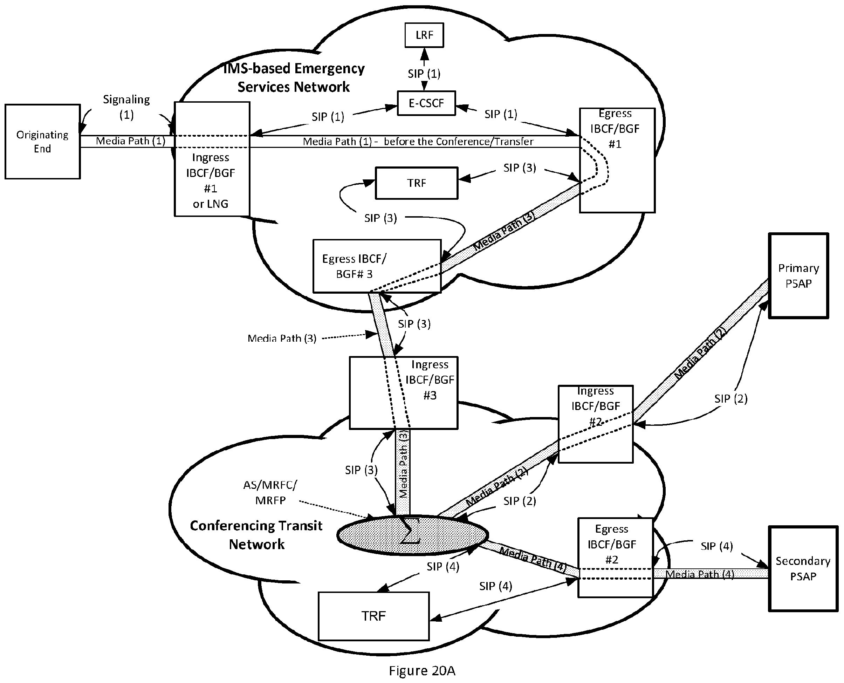

Figure 20A illustrates conferencing through an independent transit network, according to certain embodiments.

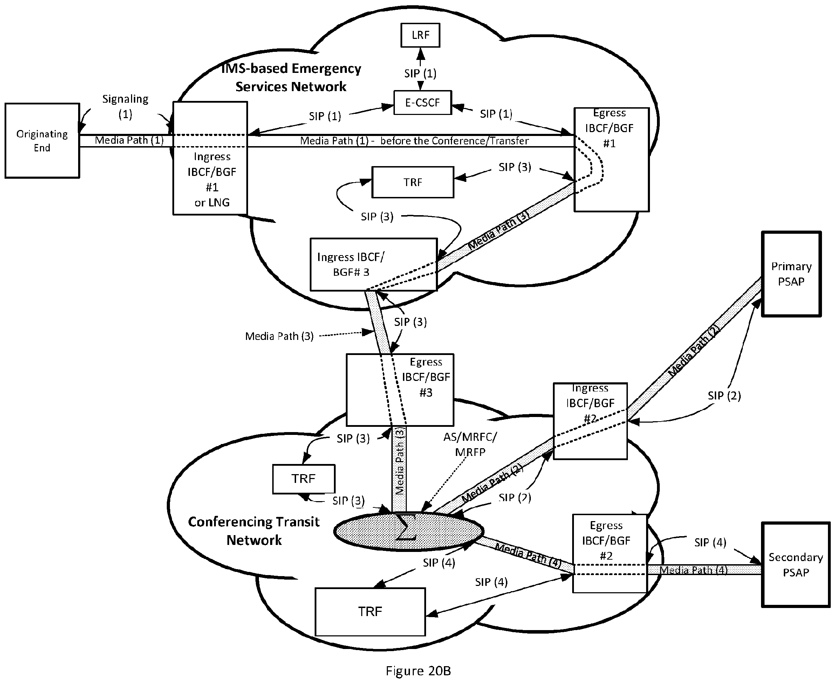

Figure 20B illustrates another alternative for conferencing through an independent transit network, according to certain embodiments.

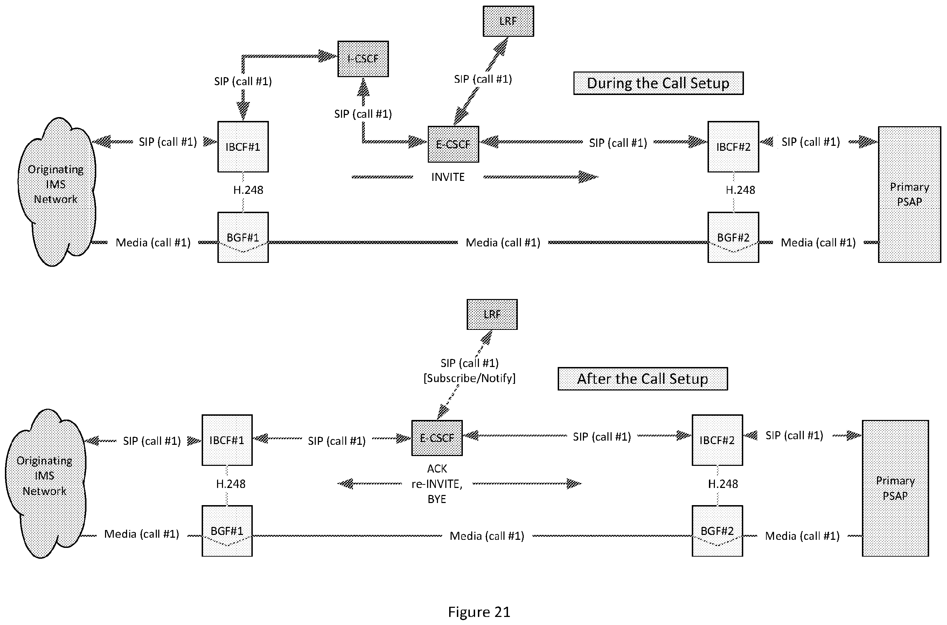

Figure 21 illustrates the topology before the call transfer, according to certain embodiments.

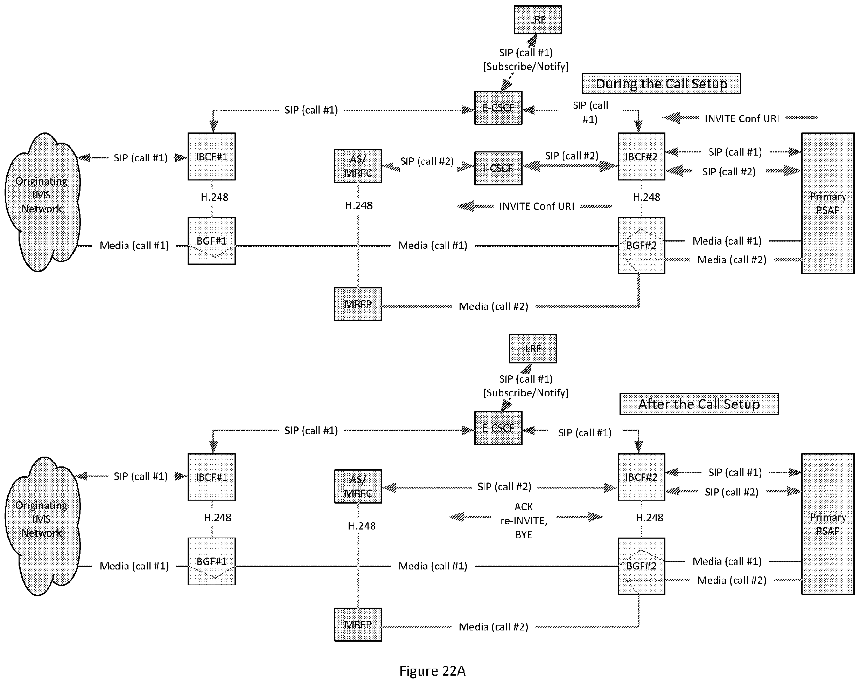

Figure 22A illustrates the topology when the Primary PSAP invokes the conference, according to certain embodiments.

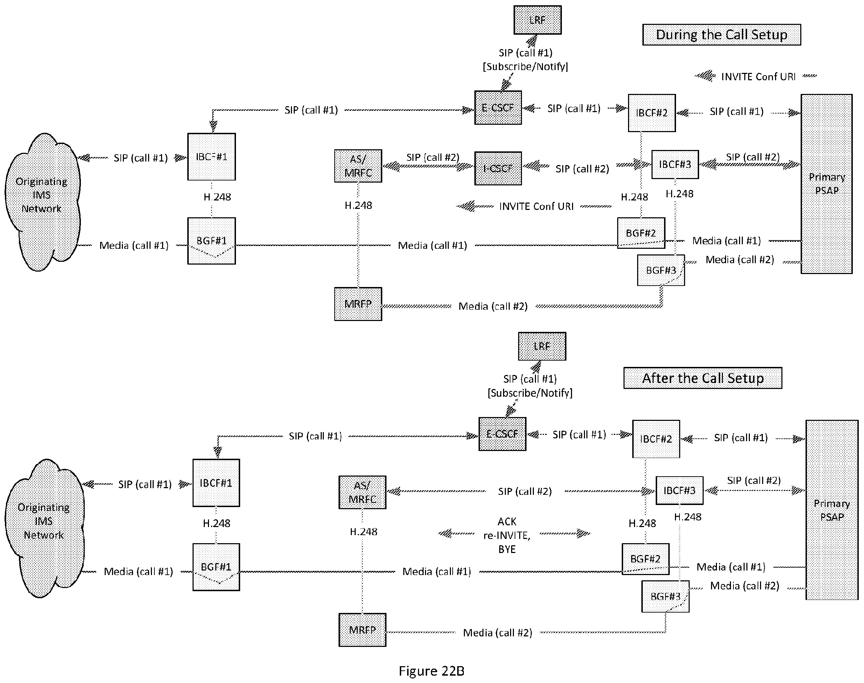

Figure 22B illustrates another topology when the Primary PSAP invokes the conference, according to certain embodiments.

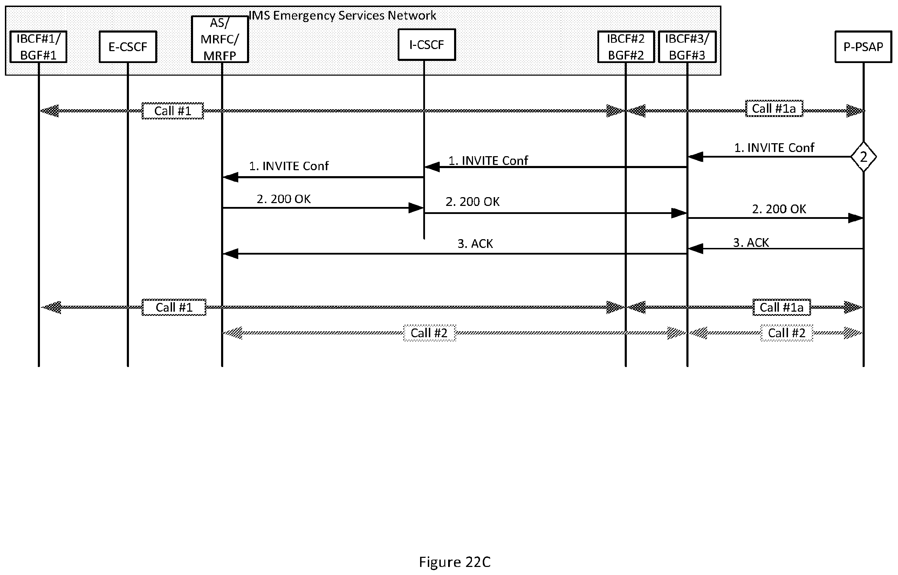

Figure 22C illustrates a flow diagram corresponding to Figure 22B, according to certain embodiments.

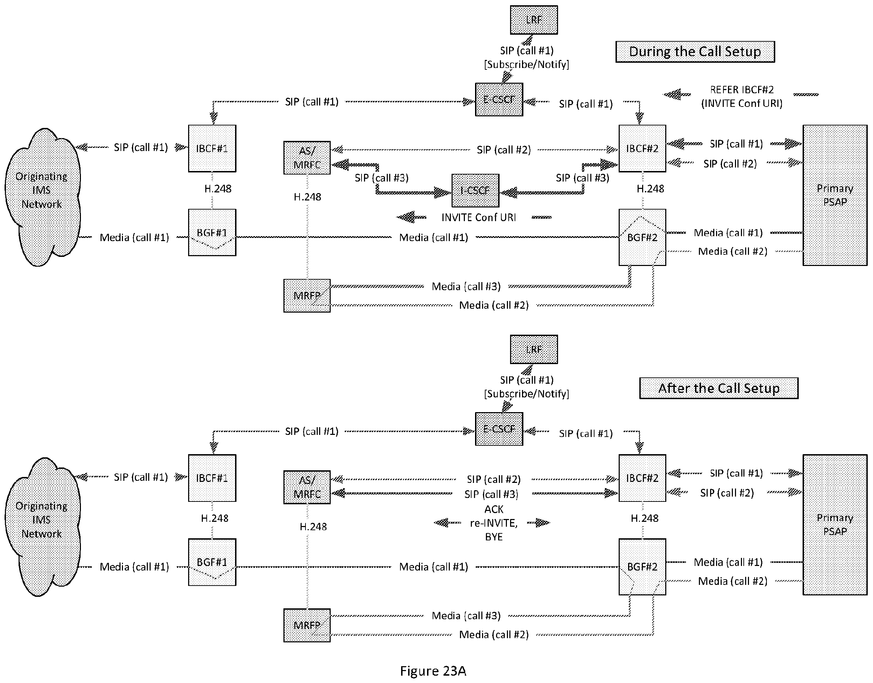

Figure 23A illustrates the topology when the original call leg is connected to the conference, according to certain embodiments.

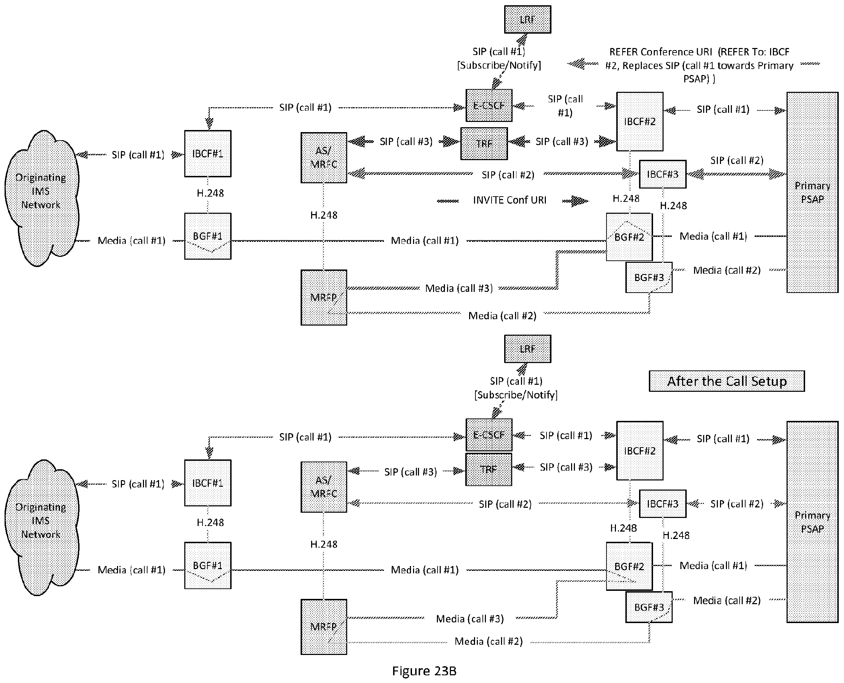

Figure 23B illustrates another topology when the original call leg is connected to the conference, according to certain embodiments.

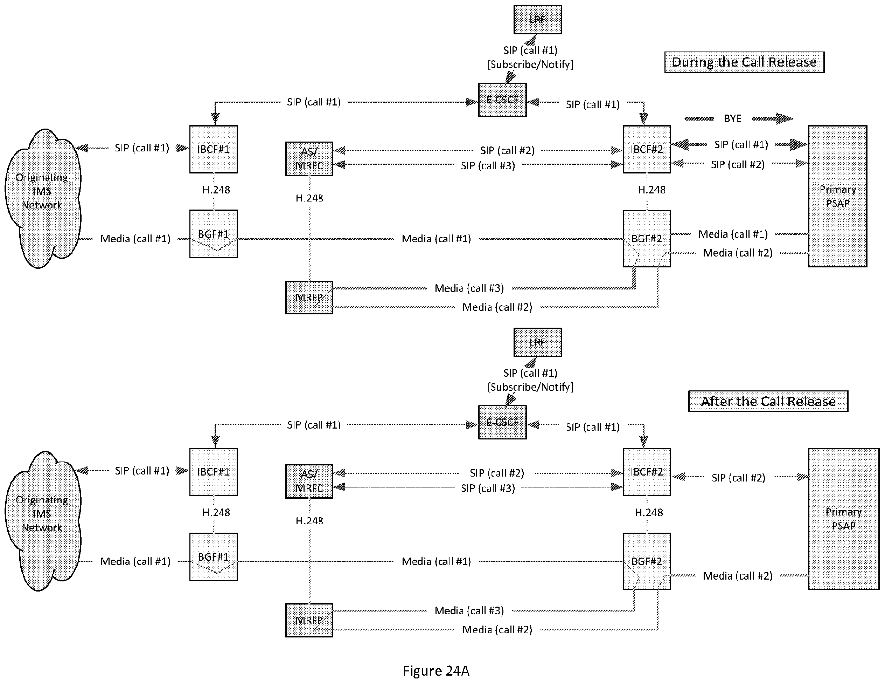

Figure 24A illustrates the topology when the original call leg to the Primary PSAP is replaced, according to certain embodiments.

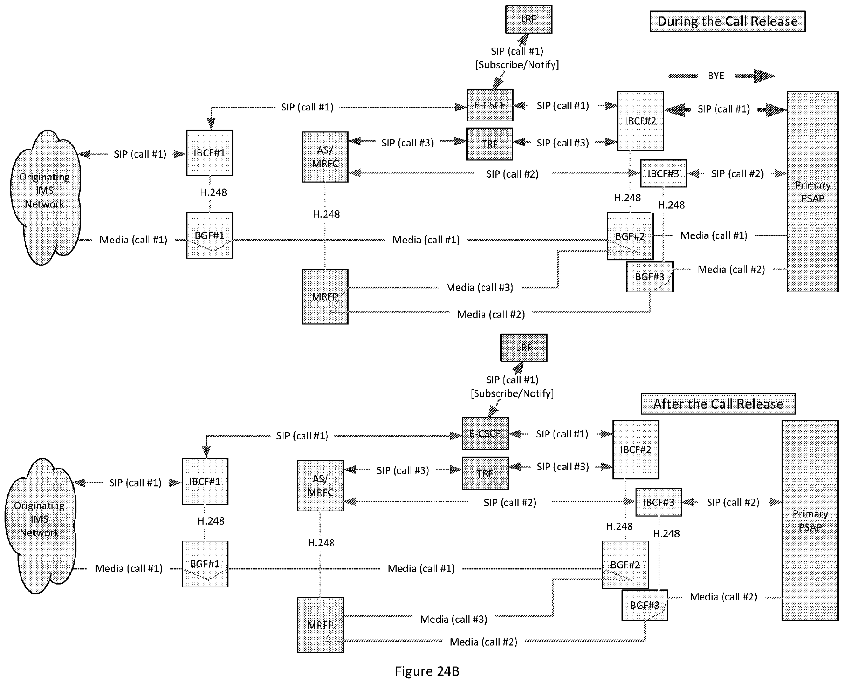

Figure 24B illustrates another topology when the original call leg to the Primary PSAP is replaced, according to certain embodiments.

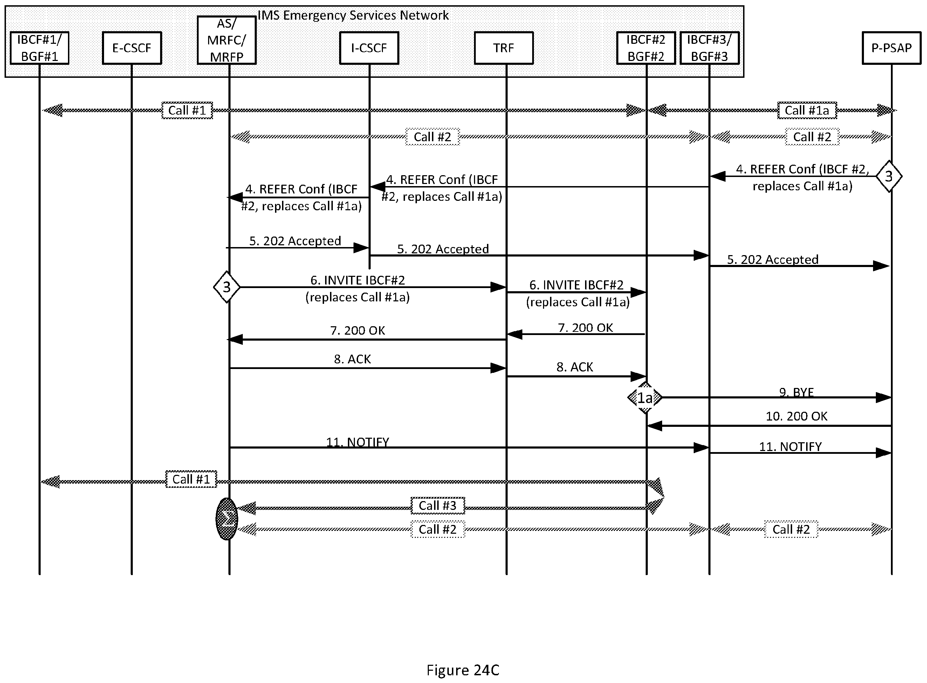

Figure 24C illustrates a flow diagram corresponding to Figure 23B and 24B, according to certain embodiments.

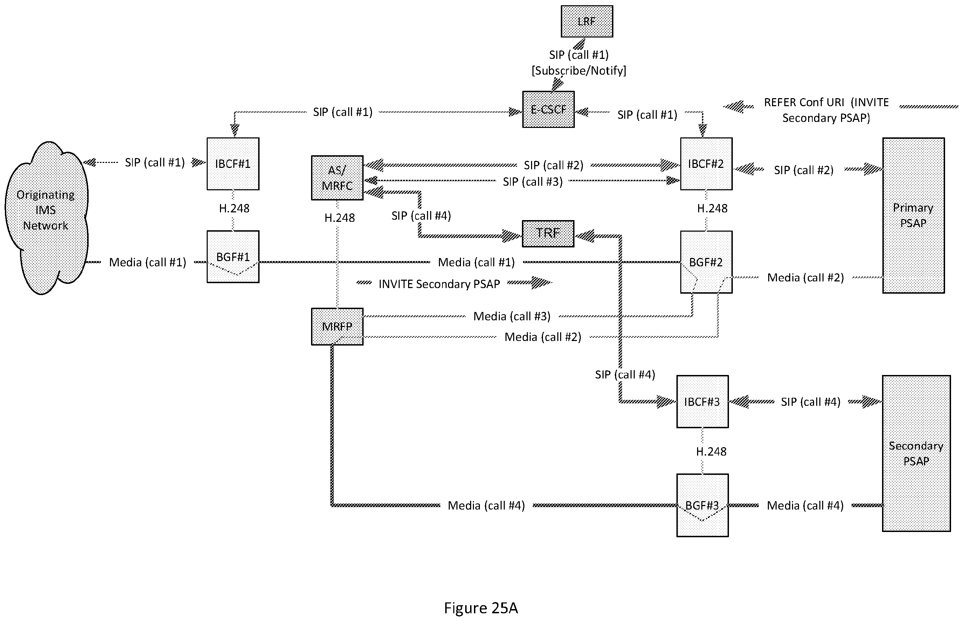

Figure 25A illustrates the topology when a call to the Secondary PSAP is set up, according to certain embodiments.

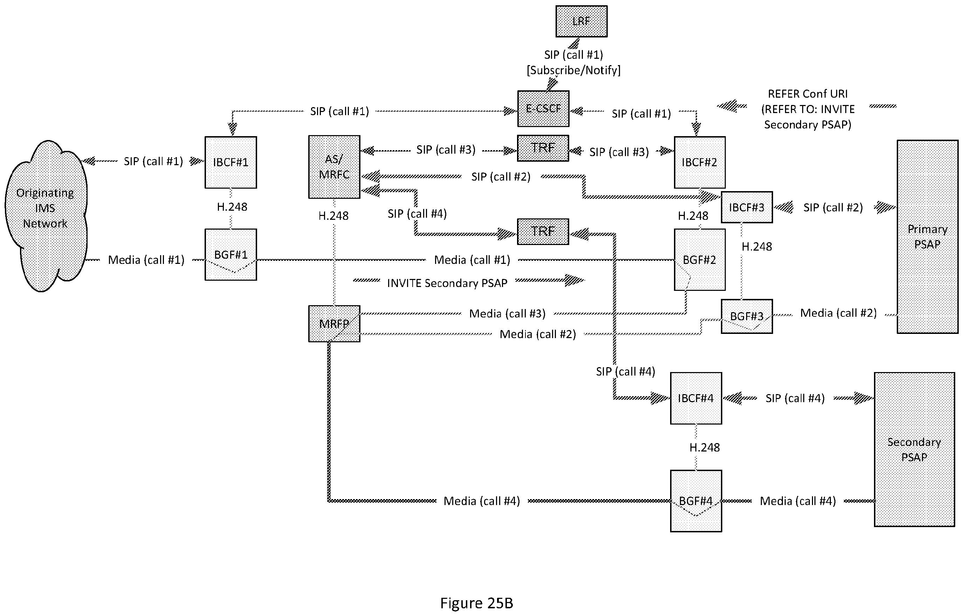

Figure 25B illustrates the topology when a call to the Secondary PSAP is set up, according to certain embodiments.

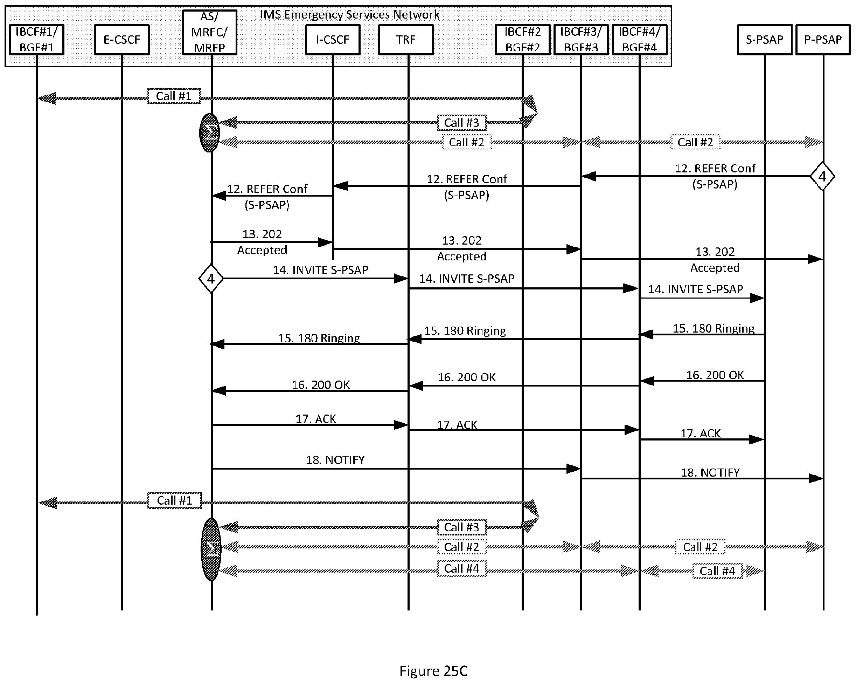

Figure 25C illustrates a flow diagram corresponding to Figure 25B, according to certain embodiments.

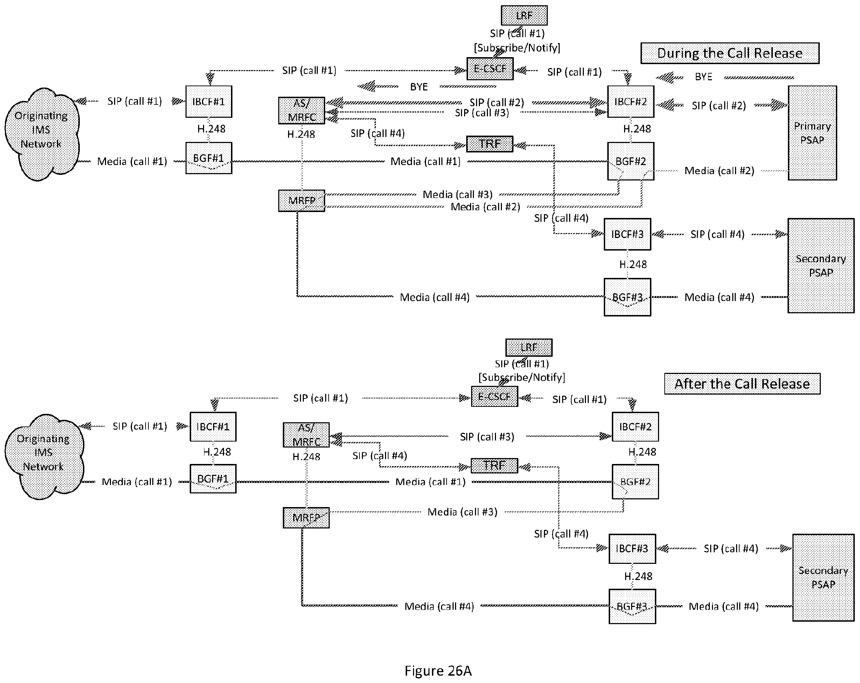

Figure 26A illustrates the topology when the Primary PSAP drops off from the conference to initiate the call transfer, according to certain embodiments.

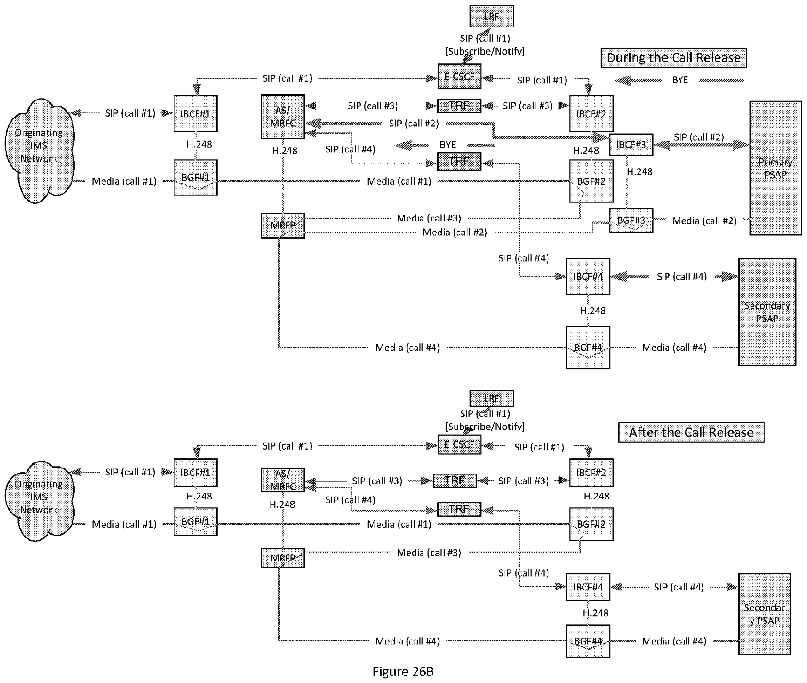

Figure 26B illustrates another topology when the Primary PSAP drops off from the conference to initiate the call transfer, according to certain embodiments.

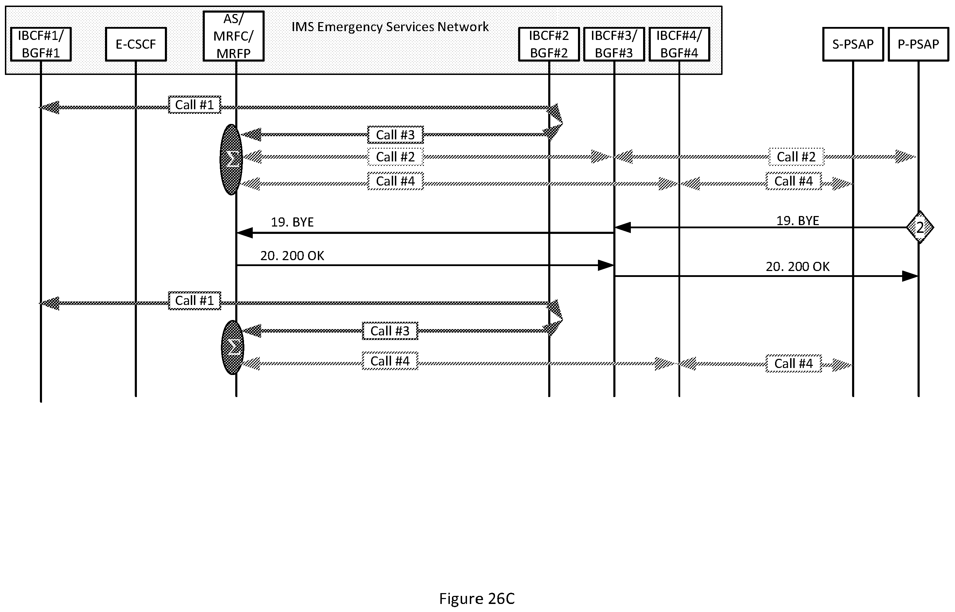

Figure 26C illustrates a flow diagram corresponding to Figure 26B, according to certain embodiments.

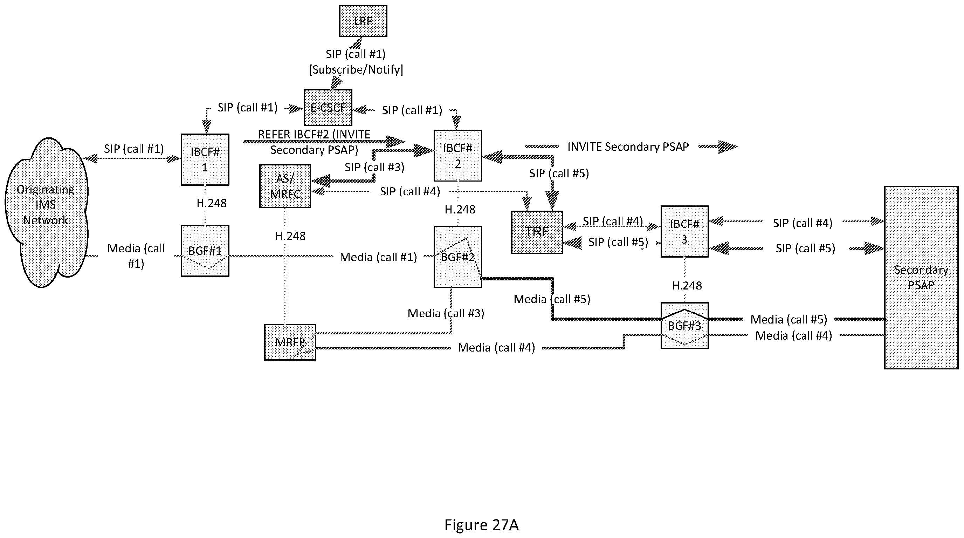

Figure 27A illustrates the topology when the AS/MRFC initiates the steps before it drops itself from the call, according to certain embodiments.

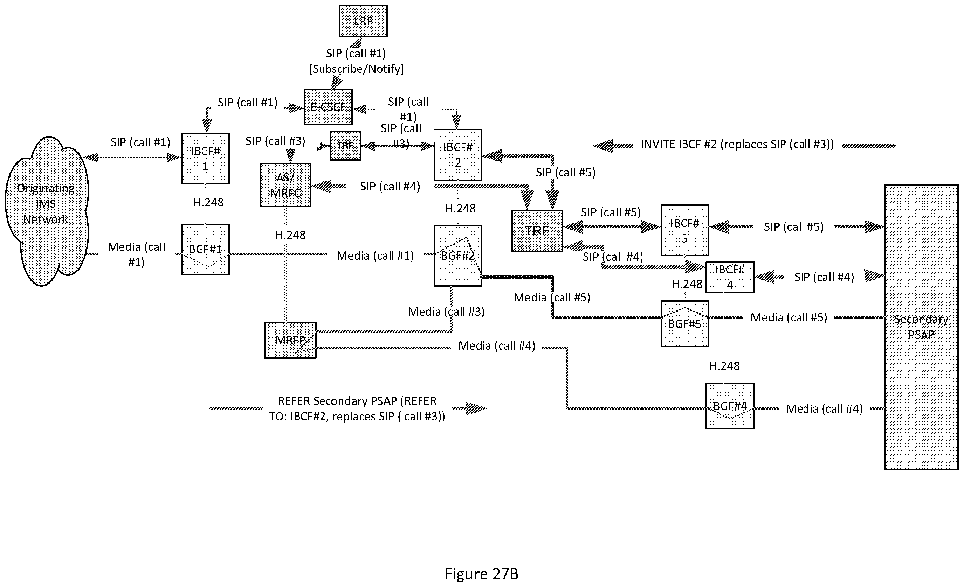

Figure 27B illustrates another topology when the AS/MRFC initiates the steps before it drops itself from the call, according to certain embodiments.

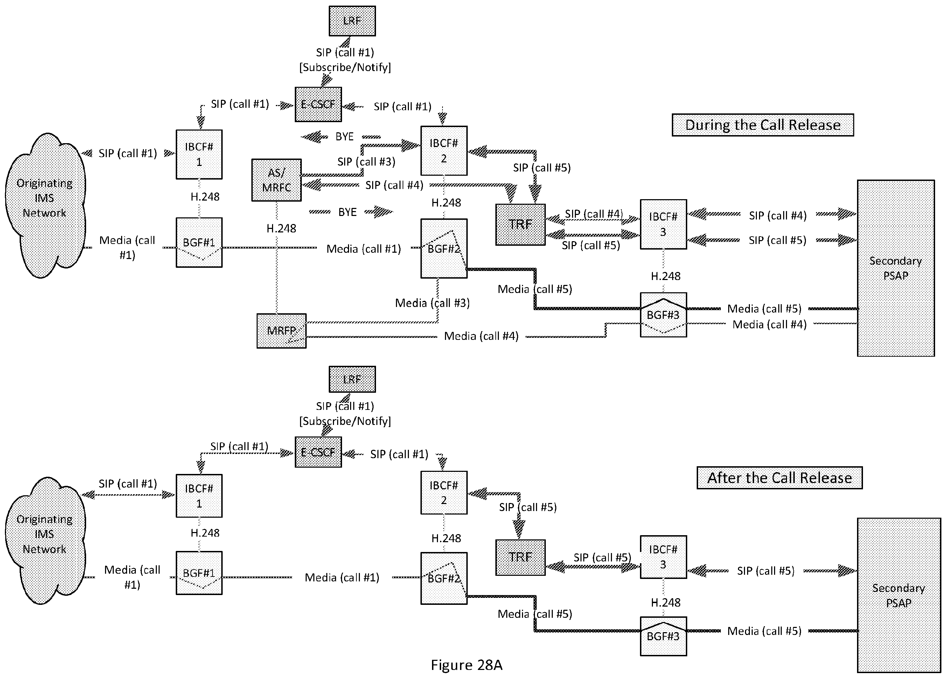

Figure 28A illustrates the topology when the conference is dropped, according to certain embodiments.

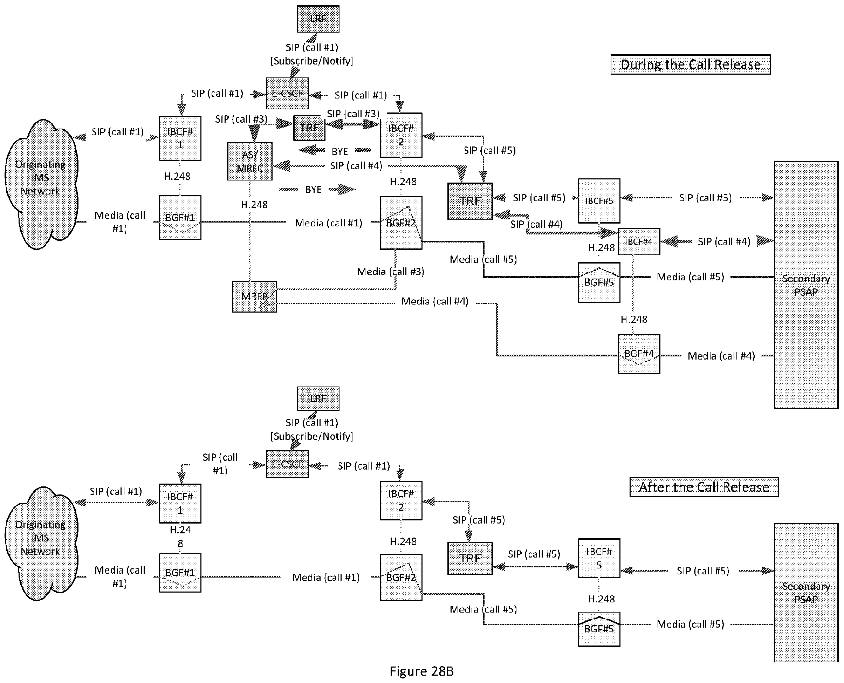

Figure 28B illustrates another topology when the conference is dropped, according to certain embodiments.

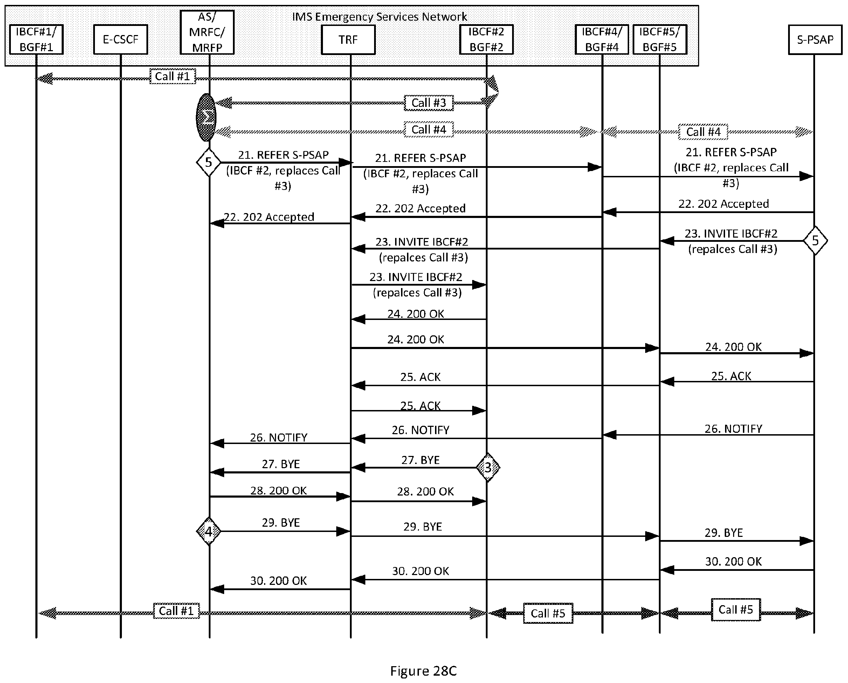

Figure 28C illustrates a flow diagram corresponding to Figure 27B and Figure 28B, according to certain embodiments.

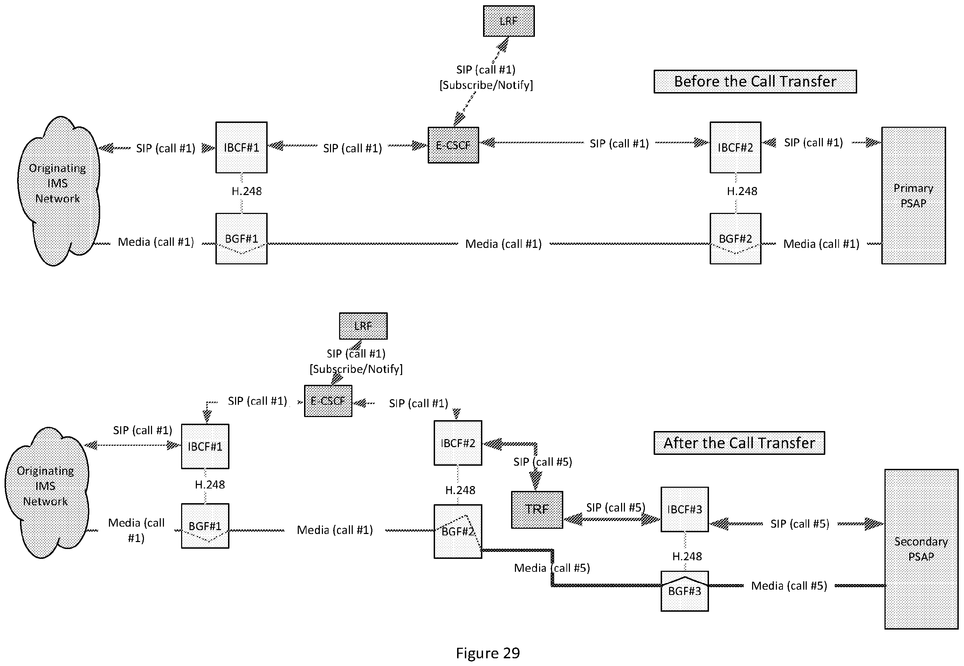

Figure 29 illustrates the topology before and after the call transfer, according to certain embodiments.

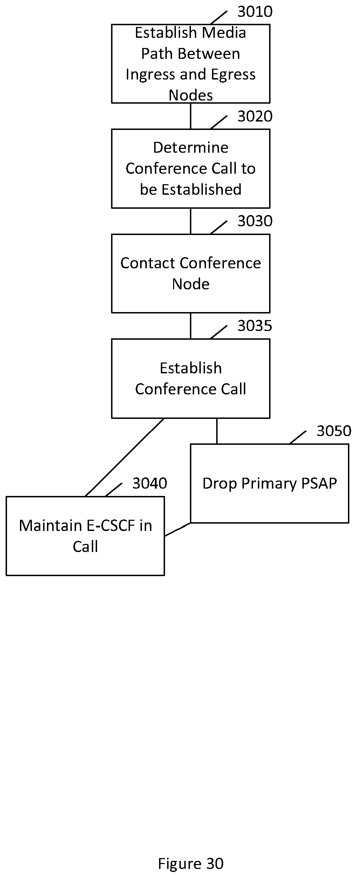

Figure 30 illustrates a method according to certain embodiments.

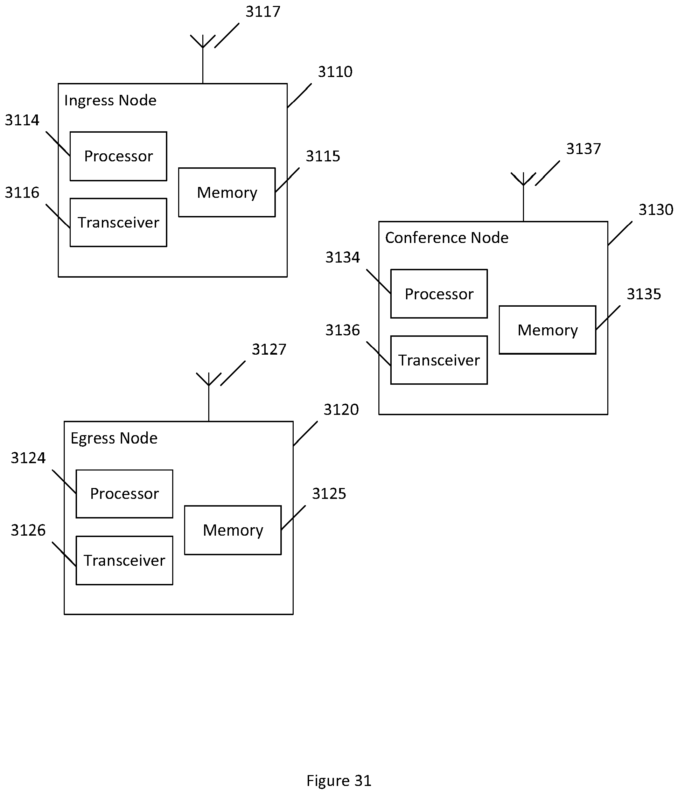

Figure 31 illustrates a system according to certain embodiments.

### DETAILED DESCRIPTION:

Certain embodiments provide that an E-CSCF, important to maintain the call state, is kept in the call path even after a call transfer, in contrast to previous approaches.

Certain embodiments, consequently, may do an invocation of the conference at the egress point rather than the ingress point. Note that a Secondary PSAP can do a subsequent conference with a different PSAP and then transfer the call. The topology views of the first instance, when the Primary PSAP conferences and transfers, and the subsequent instances, when the Secondary or Tertiary PSAP conference and transfer, can be different.

The topology of the signaling and media path before the call transfer can be as shown in Figure 4, discussed above. This may allow the ATIS project to preserve whatever they have done prior to their work on conferencing.

As mentioned above, in Figure 4 SIP (1) and Media Path (1) show the SIP signaling path and the media path of the emergency call before the transfer. The call can enter the IMS-based emergency network via ingress IBCF/BGF or LNG and leaves the network via egress IBCF/BGF to the Primary PSAP. The ingress IBCF/BGF or LNG can be referred to an ingress node. The egress IBCF/BGF can be referred to as an egress node.

Figure 16A illustrates a topology of signaling and media paths when the Primary PSAP is connected to the original call through the conference, according to certain embodiments. This diagram contrasts with the previous approach illustrated in Figure 5, and discussed above.

As shown in Figure 16A, SIP (2) and Media Path (2) show the SIP signaling and media path of the Primary PSAP connection to the conference. SIP (1) and Media Path (1) from Egress BCF/BGF #1 to the Primary PSAP can be replaced by the SIP (3) and Media Path (3) from Egress BCF/BGF #1 to Conference.

As shown in Figure 16A, the SIP (1) and Media Path (1) of the original call leg can stay intact until the Egress IBCF/BGF #1. Media Path (1) is connected to Media path (3) at the Egress BGF #1, which in turn, is connected to Media Path (2) at the Conference. As shown in the bottom of Figure 16A, E-CSCF can stay on the call path.

Figure 16B illustrates another topology of signaling and media paths when the Primary PSAP is connected to the original call through the conference, according to certain embodiments.

In Figure 16B, SIP (2) and Media Path (2) show the SIP signaling and media path of the Primary PSAP connection to the conference. SIP (1) and Media Path (1) from Egress BCF/BGF #1 to the Primary PSAP can be replaced by the SIP (3) and Media Path (3) from Egress BCF/BGF #1 to Conference.

As shown in Figure 16B, the SIP (1) and Media Path (1) of the original call leg can stay intact until the Egress IBCF/BGF #1. Media Path (1) can be connected to Media path (3) at the Egress BGF #1, which in turn, can be connected to Media Path (2) at the Conference. As shown in the bottom of Figure 16B, E-CSCF can stay on the call path.

SIP (call #2) and Media Path (call #2) can enter the IMS emergency services network through Ingress IBCF/BGF #2.

Figure 17A illustrates the topology of signaling and media path during the conference, according to certain embodiments. This diagram contrasts with the previous approach illustrated in Figure 6, and discussed above.

As shown in Figure 17A, SIP (4) and Media Path (4) show the SIP signaling path and the media path for the call from Conference to the Secondary PSAP. The other aspects can be the same as those shown in Figure 16A.

As shown in Figure 17A, the SIP (1) and Media Path (1) of the original call leg can stay intact until the Egress IBCF/BGF #1. Media Path (1) is connected to Media path (3) at the Egress BGF #1, which in turn, is connected to Media Path (2) and Media Path (4) at the Conference. As shown, E-CSCF can stay on the call path during the conference.

Figure 17B illustrates another topology of signaling and media path during the conference, according to certain embodiments. In Figure 17B, SIP (4) and Media Path (4) show the SIP signaling path and the media path for the call from Conference to the Secondary PSAP. The other aspects can be the same as discussed above with reference to Figure 17A.

As shown in Figure 17B, the SIP (1) and Media Path (1) of the original call leg can stay intact until the Egress IBCF/BGF #1. Media Path (1) can be connected to Media path (3) at the Egress BGF #1, which in turn, can be connected to Media Path (2) and Media Path (4) at the Conference. As shown, E-CSCF can stay on the call path during the conference.

Figure 18 illustrates the topology of the signaling and media path after call transfer, according to certain embodiments. This diagram contrasts with the previous approach illustrated in Figure 7, and discussed above.

As shown in Figure 18, SIP (5) and Media Path (5) show the signaling and media path from Egress IBCF/BGF#1 to Secondary PSAP via TRF and the Egress IBCF/BGF #2. The Media Path (1) is connected to Media Path (5) at the Egress BGF #1.

As can be seen from Figure 18, the E-CSCF can stay on the call path even after the call transfer. Thus, the E-CSCF can do all the functions that it is supposed to do per 3GPP definition despite the call transfer.

Figure 19 illustrates the topology of the signaling and media path after call transfer with a same egress node, according to certain embodiments. In the event the Secondary PSAP is also connected via Egress IBCF/BGF #1, then the topology can look very similar to the topology before the call transfer, as shown in Figure 19. This diagram contrasts with the previous approach illustrated in Figure 8, and discussed above.

As shown in Figure 19, SIP (5) and Media Path (5) show the signaling and media path from Egress IBCF/BGF#1 to Secondary PSAP. Media Path (1) is connected to Media Path (5) at the Egress BGF #1.

One of the advantages of certain embodiments is that the Primary PSAP can address the Egress IBCF in the REFER method. For example, the Egress IBCF address can be included in the Request URI of SIP REFER and the Egress IBCF #1, upon receiving the SIP REFER message, can initiate the call setup of SIP (3) to the Conference via the I-CSCF. Alternatively, as another example, the Primary PSAP can also send the SIP REFER to the Conference with IBCF #1 address in the refer-to field and in this case, the Conference upon receiving the SIP REFER message can initiate the call setup of SIP (3) to the IBCF #1 via the TRF.

The call setup from Egress IBCFto the Conference can also be setup via the TRF instead of I-CSCF. In such a case, the TRF would stay on the signaling path.

Figure 20A illustrates conferencing through an independent transit network, according to certain embodiments. Another advantage of certain embodiments is the possibility of conferencing provided by a completely independent conferencing transit network. The details of conference services provided by an independent transit network are specified in 3GPP TS 24.147.

In the case illustrated in Figure 20A, the Primary PSAP may have sent a SIP INVITE Conference URI to the conferencing transit network directly through the Ingress IBCF #2. The Media Path (2) shows how the Primary PSAP can be connected to the Conference.

Upon receiving a SIP REFER, the Egress IBCF#2 may have sent a SIP INVITE to the conferencing transit network through the TRF/Egress IBCF #3 and Ingress IBCF #3. The Media Path (1) can be connected to Media Path (3) at the Egress BGF #1 which in turn, can be connected to the Conference through the Egress BGF #3 and the Ingress BGF #3.

AS/MRFC may have sent a SIP INVITE directly to the Secondary PSAP through the TRF and the Egress IBCF#2. The Media path (4) shows how the Secondary PSAP can be connected to the Conference through the Egress BGF #2.

When the Primary PSAP transfers the call, the AS/MRFP may send a SIP REFER to Egress IBCF #1 to send a SIP INVITE to the Secondary PSAP. In that case, the Egress IBCF #1 may send the SIP INVITE to the Secondary PSAP directly or via a TRF. The topology after the call transfer can appear as shown in Figure 19 or Figure 18.

Figure 20B illustrates another alternative for conferencing through an independent transit network, according to certain embodiments. In this example, the Primary PSAP could have sent a SIP INVITE Conference URI to the conferencing transit network directly through the Ingress IBCF #2 and the Media Path (2) shows how the Primary PSAP is connected to the Conference.

Upon receiving a SIP REFER, the Conference could have sent a SIP INVITE to the Egress IBCF #1 present in the IMS emergency services network through the TRF and Egress IBCF #3 (within the conferencing transit network) and then through the Ingress IBCF #3 and the TRF present in the IMS emergency services network. The Media Path (1) can be connected to Media Path (3) at the Egress BGF #1 which in turn, can be connected to the Conference through the Egress BGF #3 and Ingress BGF #3.

AS/MRFC could have sent a SIP INVITE directly to the Secondary PSAP through the TRF and the Egress IBCF#2. The Media path (4) shows how the Secondary PSAP can be connected to the Conference through the Egress BGF #2.

Not shown in Figure 20B, when the Primary PSAP transfers the call, the AS/MRFP could send a SIP REFER to the Secondary PSAP asking it to send a SIP INVITE to the Egress IBCF #1. In that case, the Secondary PSAP may send the SIP INVITE to the Egress IBCF #1 through another Ingress IBCF and then through the TRF.

Certain embodiments of the present invention can be used even if the border element, such as IBCF, within the IMS emergency services network that receives the new INVITE requests from the PSAP is different from the IBCF through which the original call is connected.

Certain embodiments of the invention may have various benefits and/or advantages. For example, the PSAP may only need to know the address of the IBCF at the PSAP's own end of the IMS-based emergency services network, such as knowing the address of Egress IBCF #1 as shown in Figure 23A and discussed below. This contrasts with a need to know the address of Ingress IBCF in the approach being considered by ATIS.

Because the redirection of the original call to the conferencing can happen at the Egress IBCF/BGF of IMS-based emergency services network, impacts to other network nodes may be minimal. In the prior art, the functions performed by the Ingress IBCF/BGF may have to be implemented in the LNG as well.

Additionally, certain embodiments retain the E-CSCF on the signaling path, even after the call transfer. This may help the IMS-based emergency services network to use the E-CSCF defined in 3GPP TS 23.167.

Certain embodiments of allow conferencing services provided by an independent transit network, because the original call to the Egress BCF/BGF can stay on the call independent of where and how the conferencing is provided.

Furthermore, certain embodiments can also be recursively applied to subsequent call transfer situations. For example, Secondary PSAP conferencing and transferring the call to Tertiary PSAP can be handled similarly to the process for transferring the call to the Secondary PSAP.

Additionally, certain embodiments can be used even if the Secondary or Tertiary PSAPs are not served by the same IMS emergency services network that serves the Primary PSAP. Thus, certain embodiments may provide flexibility.

The following provides a step by step illustration of conferencing and call transfer. This illustration is provided to aid in understanding certain embodiments, but should not be taken as limiting, as other orders of steps are also permitted. In this example, a Primary PSAP can invoke conference between the calling party and the Secondary PSAP, and can then transfer the call to the Secondary PSAP in a step by step manner.

The call originating from an IMS network is considered in this illustration. Because of the work that happens at the Egress point of IMS-based emergency services network, the same approach can work even for calls originating from a legacy network.

Figure 21 illustrates the topology before the call transfer, according to certain embodiments. In this step, before the call transfer, the call can enter the IMS-based Emergency Network at IBCF#1/BGF#1 and exit at IBCF#2/BGF#2. SIP (call #1) denotes the signaling path and Media (call #1) denotes the media path.

Figure 22A illustrates the topology when the Primary PSAP invokes the conference, according to certain embodiments. As shown, the Primary PSAP can send a SIP INVITE with Conference URI as the Request URI to the IBCF #2. The IBCF#2 can forward the SIP INVITE to the I-CSCF, which in turn, can forward the SIP INVITE to AS/MRFC.

The signaling path for this new call is shown as SIP (call #2) and the corresponding media path is shown as Media (call #2). Note that I-CSCF does not stay on the call path in this example.

Figure 22B illustrates another topology when the Primary PSAP invokes the conference, according to certain embodiments. As shown, the Primary PSAP can send a SIP INVITE with Conference URI as the Request URI to the IBCF #3. The IBCF#3 can forward the SIP INVITE to the I-CSCF, which in turn, can forward the SIP INVITE to AS/MRFC.

The signaling path for this new call is shown as SIP (call #2) and the corresponding media path is shown as Media (call #2). In this example, I-CSCF does not stay on the call path.

Figure 22C illustrates a flow diagram corresponding to Figure 22B, according to certain embodiments. This and other signaling flows herein illustrate certain aspects of some alternative embodiments. Not all the SIP messages are shown. These are meant to show the signaling flow rather than a complete call flow.

As shown in Figure 22C, an original call is identified as Call #1 (from the calling party till the IBCF#2/BGF#2) and as Call #1a from IBCF#2/BGF#2 to the Primary PSAP (denoted as P-PSAP).

Primary PSAP can send the SIP INVITE Conf to AS/MRFC. The INVITE can goe through IBCF #3 and I-CSCF. This can be the start of Call #2 setup.

AS/MRFC can return the SIP 200 OK to Primary PSAP. SIP 200 OK can go through the I-CSCF and IBCF#3.

The Primary PSAP can return the SIP ACK. The SIP ACK can go through the IBCF#3. Because I-CSCF does not stay on the call path, SIP ACK does not have to go through the I-CSCF.

The Call #2 is now set up, in this example. The Primary PSAP can be connected to the Conference (Call #2). Primary PSAP can still be on Call #1a.

Figure 23A illustrates the topology when the original call leg is connected to the conference, according to certain embodiments. As shown, the Primary PSAP can send a SIP REFER to IBCF#2 asking it to send a SIP INVITE to the AS/MRFC, replacing SIP (call #1). The IBCF#2 can send a SIP INVITE to the I-CSCF, which in turn, can forward the SIP INVITE to AS/MRFC.

The signaling path for this new call is shown as SIP (call #3) and the corresponding media path is shown as Media (call #3). Note that I-CSCF does not stay on the call path in this example. Media (call #1) can be connected to Media (call #3) at the BGF #2.

Figure 23B illustrates another topology when the original call leg is connected to the conference, according to certain embodiments. As shown, the Primary PSAP can send a SIP REFER to AS/MRFC asking it to send a SIP INVITE to the IBCF #2, replacing SIP (call #1) towards the Primary PSAP. The AS/MRFC can send a SIP INVITE to the TRF, which in turn, can forward the SIP INVITE to IBCF #2.

The signaling path for this new call is shown as SIP (call #3) and the corresponding media path is shown as Media (call #3). Media (call #1) can be connected to Media (call #2) at the BGF #2.

Figure 24A illustrates the topology when the original call leg to the Primary PSAP is replaced, according to certain embodiments. After completing the call to the AS/MRFC (as illustrated through Figure 23A), the IBCF #2 can send a SIP BYE to the Primary PSAP to kill the SIP (call #1).

Now the Media (call #1) can be connected to Media (call #3) at the BGF #2 which can be connected to Media (call #2) at the MFRP. Thus, the Primary PSAP can be connected to the original call via the conference.

Figure 24B illustrates another topology when the original call leg to the Primary PSAP is replaced, according to certain embodiments. After completing the call from the AS/MRFC (shown in Figure 23B), the IBCF #2 can send a BYE to the Primary PSAP to kill the SIP (call #1).

Now, in this example, the Media (call #1) is connected to Media (call #3) at the BGF #2 which is connected to Media (call #2) at the MFRP. Thus, the Primary PSAP can be connected to the original call via the conference.

Figure 24C illustrates a flow diagram corresponding to Figure 23B and 24B, according to certain embodiments. As shown in Figure 24C, the Primary PSAP can be connected to the Conference (Call #2). Primary PSAP can still be on Call #1a.

Primary PSAP can send the SIP REFER Conf to the AS/MRFC with refer-to field pointing to IBCF#2 and can replace the field identifying Call #1a. The SIP REFER message can go through the IBCF#3 and I-CSCF before reaching the AS/MRFC.

AS/MRFC can send the SIP 202 Accepted back to the Primary PSAP. The SIP 202 Accepted can go through the I-CSCF and IBCF#3.

AS/MRFC can send a SIP INVITE IBCF#2 (with a replaced field identifying call #1a) to the IBCF#2. The SIP INVITE can go through the TRF. This is the start of Call #3 setup.

IBCF#2 can send the SIP 200 OK back to the AS/MRFC. The Call #3 is now setup.

AS/MRFC can return the SIP ACK to the IBCF#2.

IBCF#2 can send a SIP BYE to release the Call #1a to the Primary PSAP.

Primary PSAP can return a SIP 200 OK to the IBCF#2.

The AS/MRFC can send a SIP NOTIFY to the Primary PSAP to indicate whatever was requested through REFER was completed. The SIP NOTIFY can be sent right after the AS/MRFC returns the SIP ACK to the IBCF #2.

The Primary PSAP can be connected to the Conference (Call #2). Original Call leg (Call #1) can be connected to Conference through the BGF#2 (Call #3). The call leg from BGF#2 to Primary PSAP (Call #1a) can be released.

Figure 25A illustrates the topology when a call to the Secondary PSAP is set up, according to certain embodiments. The Primary PSAP can send a SIP REFER to the Conference URI asking it to set up a call to the Secondary PSAP. The AS/MRFC can send a SIP INVITE through the TRF to IBCF #3to the Secondary PSAP.

The signaling path for this new call is shown as SIP (call #4) and the corresponding media path is shown as Media (call #4). Now the Media (call #1) can be connected to Media (call #3) at the BGF #2 which is connected to Media (call #2) and Media (call #4) at the MRFP. The Primary PSAP can be in conference with the original call and the Secondary PSAP.

Figure 25B illustrates the topology when a call to the Secondary PSAP is set up, according to certain embodiments. The Primary PSAP can send a SIP REFER to the Conference URI asking it to set up a call to the Secondary PSAP. The AS/MRFC can send a SIP INVITE through the TRF to IBCF #4 to the Secondary PSAP.

The signaling path for this new call is shown as SIP (call #4) and the corresponding media path is shown as Media (call #4). Now, in this example, the Media (call #1) is connected to Media (call #3) at the BGF #2 which is connected to Media (call #2) and Media (call #4) at the MRFP. The Primary PSAP can be in conference with the original call and the Secondary PSAP.

Figure 25C illustrates a flow diagram corresponding to Figure 25B, according to certain embodiments. As shown in Figure 25C, the Primary PSAP can be connected to the Conference (Call #2). Original Call leg (Call #1) can be connected to Conference through the BGF#2 (Call #3).

Primary PSAP can send the SIP REFER Conf to the AS/MRFC with refer-to field pointing to Secondary PSAP (denoted as S-PSAP). The SIP REFER message can go through the IBCF#3 and I-CSCF before reaching the AS/MRFC.

AS/MRFC can send the SIP 202 Accepted back to the Primary PSAP. The SIP 202 Accepted can go through the I-CSCF and the IBCF#3.

AS/MRFC can send a SIP INVITE S-PSAP to the Secondary PSAP. The SIP INVITE can go through the TRF and IBCF#4 to the Secondary PSAP. This can be the start of Call #4 setup.

Secondary PSAP can send the SIP 180 Ringing to the AS/MRFC.

Secondary PSAP, upon answer, can send the SIP 200 OK back to the AS/MRFC.

AS/MRFC can return the SIP ACK to the Secondary PSAP.

AS/MRFC can send the SIP NOTIFY to the Primary PSAP indicating that the call to the Secondary PSAP has been setup.

The Primary PSAP can be connected to the Conference (Call #2). Original Call leg (Call #1) can be connected to Conference through the BGF#2 (Call #3). The Secondary PSAP can be connected to the Conference (Call #4). The Primary PSAP can, loosely speaking, be in a conference call with the emergency caller and the Secondary PSAP.

Figure 26A illustrates the topology when the Primary PSAP drops off from the conference to initiate the call transfer, according to certain embodiments. The Primary PSAP can send a SIP BYE to the AS/MRFC to release itself from the conference.

After the Primary PSAP is disconnected from the call, the Media (call #1) can be connected to Media (call #3) at the BGF #2, which in turn, can be connected to the Media (call #4) at the MRFP. Here, the Secondary PSAP can be connected to the call through the conference.

Figure 26B illustrates another topology when the Primary PSAP drops off from the conference to initiate the call transfer, according to certain embodiments. The Primary PSAP can send a BYE to the AS/MRFC to release itself from the conference.

After the Primary PSAP is disconnected from the call, the Media (call #1) can be connected to Media (call #3) at the BGF #2, which in turn, can be connected to the Media (call #4) at the MRFP. In this example, the Secondary PSAP is connected to the call through the conference.

Figure 26C illustrates a flow diagram corresponding to Figure 26B, according to certain embodiments. As shown, the Primary PSAP can be connected to the Conference (Call #2). Original Call leg (Call #1) can be connected to Conference through the BGF#2 (Call #3). The Secondary PSAP can be connected to the Conference (Call #4). The Primary PSAP can basically be in a conference call with the emergency caller and the Secondary PSAP.

The Primary PSAP can send a SIP BYE (Call #2) to the AS/MRFC to drop out of the conference.

AS/MRFC can return the SIP 200 OK to the Primary PSAP. Thus Call #2 can be released.

The Primary PSAP can be out of the conference now (Call #2 is released). Original Call leg (Call #1) can be connected to Conference through the BGF#2 (Call #3). The Secondary PSAP can be connected to the Conference (call #4).

Figure 27A illustrates the topology when the AS/MRFC initiates the steps before it drops itself from the call, according to certain embodiments. AS/MRFC can send a SIP REFER to the IBCF #2 asking it to send a SIP INVITE to the Secondary PSAP. The IBCF #2 can send the SIP INVITE to the Secondary PSAP via the TRF and IBCF #3.

The signaling path for this new call is shown as SIP (call #5) and the corresponding media path is shown as Media (call #5). Now the Media (call #1) can be connected to Media (call #5) at the BGF #2. In the next step, the call #3 and call #4 can be dropped.

Figure 27B illustrates another topology when the AS/MRFC initiates the steps before it drops itself from the call, according to certain embodiments. AS/MRFC can send a SIP REFER to the Secondary PSAP, asking the Secondary PSAP to send a SIP INVITE to the IBCF #2. The Secondary PSAP can send the SIP INVITE to the IBCF #2 through the IBCF #5 and TRF.

The signaling path for this new call is shown as SIP (call #5) and the corresponding media path is shown as Media (call #5). Now, in this example, the Media (call #1) is connected to Media (call #5) at the BGF #2. In the next step, the call #3 and call #4 can be dropped.

Figure 28A illustrates the topology when the conference is dropped, according to certain embodiments. IBCF #2 sends a SIP BYE to release the call #3 to the AS/MRFC. The AS/MRFC sends a SIP BYE towards the Secondary PSAP to release the call #4. Now the Media (call #1) can be connected to Media (call #5) at the BGF #2.

Figure 28B illustrates another topology when the conference is dropped, according to certain embodiments. IBCF #2 can send a BYE to release the call #3 to the AS/MRFC. The AS/MRFC can send a BYE toward the Secondary PSAP to release the call #4. Now, in this example, the Media (call #1) is connected to Media (call #5) at the BGF #2.

The call from the Secondary PSAP may land on directly IBCF/BGF #2 without going through the IBCF #5/BGF #5 and TRF. In that case, in Figure 28B, SIP (call #5)/Media (call #5) would have gone from Secondary PSAP to the IBCF#2/BGF#2.

Figure 28C illustrates a flow diagram corresponding to Figure 27B and Figure 28B, according to certain embodiments. As shown, original call leg (Call #1) can be connected to Conference through the BGF#2 (Call #3). The Secondary PSAP can be connected to the Conference (Call #4).

AS/MRFC can send a SIP REFER S-PSAP to the Secondary PSAP refer-to field pointing to IBCF#2 and can replace the field identifying the Call #3. The SIP REFER message can go through the TRF and IBCF#4.

The Secondary PSAP can return the SIP 202 Accepted to the AS/MRFC. The SIP 202 Accepted can go through the IBCF#4 and TRF.

The Secondary PSAP can send a SIP INVITE IBCF#2 to IBCF#2 with a replaced field identifying Call #3. The SIP INVITE can go through IBCF#5, TRF before reaching IBCF#2. This can be the beginning of Call #5 setup.

The IBCF #2 can return a SIP 200 OK to the Secondary PSAP.

Secondary PSAP can return the SIP ACK to the IBCF#2.

Secondary PSAP can send a SIP NOTIFY to the AS/MRFC indicating the call to IBCF#2 is setup.

IBCF #2 upon receiving the SIP ACK can send a SIP BYE (Call #3) to the AS/MRFC.

AS/MRFC can return the SIP 200 OK to the IBCF #2. Thus, Call #3 can be released.

Upon receiving the SIP NOTIFY, the AS/MRFC can send a SIP BYE to the Secondary PSAP (Call #4).

The Secondary PSAP can return the SIP 200 OK. Thus Call #4 can be released.

Original Call leg (Call #1) can be connected to Secondary PSAP through the BGF #2 and BGF #5 (Call #5). E-CSCF can still be on a call path.

Figure 29 illustrates the topology before and after the call transfer, according to certain embodiments. Before the call transfer, the Media (call #1) can be used. After the call transfer, Media (call #1) can be connected to Media (call #5) at the BGF #2. As can be seen in Figure 29, the E-CSCF can stay on the signaling path after the call transfer.

If the call to the Secondary PSAP goes through the same IBCF/BGF through which the call to the Primary PSAP had gone through, then in the Figure 29, SIP (call #5) and Media (call #5) can go from IBCF#2/BGF#2 to Secondary PSAP.

Figure 30 illustrates a method according to certain embodiments. As shown in Figure 30, a method can include, at 3010, establishing, at an egress node of a network, a media path between an ingress node of the network and the egress node. The ingress node can be an interconnect border control function, border gateway function, or legacy network gateway. The egress node can be an interconnect border control function or border gateway function. The media path may be Media Path (1) as shown in Figure 16A and following.

Figures 16B, 17B, 20B, 22B, 23B, 24B, 25B, 26B, 27B, and 28B provide some alternative embodiments. These alternative embodiments may be relevant as well to Figures 18, 19, 21, and 29. These alternative embodiments show that multiple options can be defined for the flow of REFER-method. Also, the border element of a new dialogue does not have to be the one currently in use.

When the Primary PSAP sends the SIP INVITE Conference URI, that SIP INVITE does not have to go to the Egress BCF/BGF through which the original call was connected. Certain embodiments work fine even if the SIP INVITE from the Primary PSAP enters the IMS emergency services network through an independent IBCF/BGF. When it is a different IBCF/BGF, this can be called an Ingress IBCF/BGF because that is the entry point in the IMS emergency services network for that SIP INVITE flow. For example, this is shown as Ingress IBCF/BGF #2 in Figure 16B. This can contrast to embodiments in which the SIP INVITE is sent through the same Egress node through which the original call was set up,

In the alternative embodiments, when the media path of the original call is redirected to the Conference at the Egress BCF/BGF (though which the original call was going through), the SIP REFER that the Primary PSAP sends can also be to the Conference asking the Conference to send a SIP INVITE to that Egress BCF where the call was present. Also, the SIP REFER may also enter the network through a separate IBCF (not shown, for the sake of simplicity and clarity). This can contrast with embodiments in which the SIP REFER is sent to the Egress Node where the original call was and that Egress Node sends the SIP INVITE to the Conference.

In the alternative embodiments, at the end of the call transfer (when the Conference wants to drop itself out), the Conference can also send the SIP REFER to the Secondary PSAP asking the Secondary PSAP to send the SIP INVITE to the Egress node where the call is. This can contrast to the embodiments in which the SIP REFER is sent to the Egress Node where the original call was and that Egress Node sends the SIP INVITE to the Secondary PSAP.

In such embodiments, a call from conference to the IBCF within the network can go through a TRF (see Figure 11). Similarly, a call from IBCF to IBCF within the network can go through the TRF (see Figure 12).

The method can also include, at 3020, determining that a conference call corresponding to the media path is being invoked. This determination can be made at the egress node. For example, the determination can include receiving a message from a primary public safety answer point indicating that the conference node is to be contacted. This message from the primary PSAP may be the "INVITE Conf URI" sent as illustrated in Figure 22A, and discussed above.

The method can further include, at 3030, contacting, by the egress node, a conference node to establish the conference call. The contacting can include forwarding the message toward the conference node. Thus, as shown in Figure 22A, the method can include forwarding the "INVITE Conf URI" to the I-CSCF, which in turn can communicate the message to the AS/MRFC. Thus, the conference node can include at least one of an application server, a multimedia resource function controller, or a multimedia resource function processor.

In a variant, the method can include, at 3035, establishing the conference call. The establishing the conference call can include replacing a path to a primary public safety answer point with a path passing through the egress node and the conference node, as illustrated in Figure 24A, and discussed above.

In a variant, the method further can include maintaining, at 3040, an emergency call state control function in the conference call even after a primary public safety answer point is dropped from the call at 3050.

Figure 31 illustrates a system according to certain embodiments of the invention. In one embodiment, a system may include multiple devices, such as, for example, at least one ingress node 3110, at least one egress node 3120, and at least one conference node 3130. Various examples of these nodes are discussed above, for example with reference to Figure 30.

Each of these devices may include at least one processor, respectively indicated as 3114, 3124, and 3134. At least one memory can be provided in each device, and indicated as 3115, 3125, and 3135, respectively. The memory may include computer program instructions or computer code contained therein. The processors 3114, 3124, and 3134 and memories 3115, 3125, and 3135, or a subset thereof, can be configured to provide means corresponding to the various blocks of Figure 30.

As shown in Figure 31, transceivers 3116, 3126, and 3136 can be provided, and each device may also include an antenna, respectively illustrated as 3117, 3127, and 3137. Other configurations of these devices, for example, may be provided. For example, conference node 3130 may be configured solely for wired communication, and in such a case antenna 3137 can illustrate any form of communication hardware, without requiring a conventional antenna.

Transceivers 3116, 3126, and 3136 can each, independently, be a transmitter, a receiver, or both a transmitter and a receiver, or a unit or device that is configured both for transmission and reception.

Processors 3114, 3124, and 3134 can be embodied by any computational or data processing device, such as a central processing unit (CPU), application specific integrated circuit (ASIC), or comparable device. The processors can be implemented as a single controller, or a plurality of controllers or processors.

Memories 3115, 3125, and 3135 can independently be any suitable storage device, such as a non-transitory computer-readable medium. A hard disk drive (HDD), random access memory (RAM), flash memory, or other suitable memory can be used. The memories can be combined on a single integrated circuit as the processor, or may be separate from the one or more processors. Furthermore, the computer program instructions stored in the memory and which may be processed by the processors can be any suitable form of computer program code, for example, a compiled or interpreted computer program written in any suitable programming language.

The memory and the computer program instructions can be configured, with the processor for the particular device, to cause a hardware apparatus such as ingress node 3110, egress node 3120, and conference node 3130, to perform any of the processes described herein (see, for example, Figure 30). Therefore, in certain embodiments, a non-transitory computer-readable medium can be encoded with computer instructions that, when executed in hardware, perform a process such as one of the processes described herein. Alternatively, certain embodiments of the invention can be performed entirely in hardware.

Furthermore, although Figure 31 illustrates a system including an ingress node, egress node, and conference node, embodiments of the invention may be applicable to other configurations, and configurations involving additional elements. For example, not shown, additional nodes may be present, as illustrated in Figures 16A and following.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention which is only defined by the appended claims.

### List of Abbreviations

- 3GPP: 3rd Generation Partnership Project
- AS: Application Server
- ATIS: Alliance for Telecommunications Industry Solutions
- BCF: Border Control Function
- BGCF: Breakout Gateway Control Function
- BGF: Border Gateway Function
- CS: Circuit Switched
- CSCF: Call State Control Function
- E-CSCF: Emergency CSCF
- ECRF: Emergency Call Routing Function
- ES: Emergency Services
- ESRP: Emergency Services Routing Proxy ESInetEmergency Services IP Network
- I-CSCF: Interrogating CSCF

- IBCF: Interconnect BCF
- IMS: IP Multimedia Subsystem
- IP: Internet Protocol
- LNG: Legacy Network Gateway
- LPG: Legacy PSAP Gateway
- LRF: Location Retrieval Function
- LS: Location Server
- LSRG: Legacy Selective Router Gateway
- MGCF: Media Gateway Control Function
- MRFC: Multimedia Resource Function Controller
- MRFP: Multimedia Resource Function Processor
- NENA: National Emergency Number Association
- NG: Next Generation
- P-CSCF: Proxy CSCF
- PSAP: Public Safety Answering Point
- PSI: Public Services Identity
- PSTN: Public Switched Telephone Network
- S-CSCF: Serving CSCF
- SIP: Session Initiation Protocol
- SR: Selective Router
- TRF: Transit and Roaming Function
- TS: Technical Specification
- UE: User Equipment
- URI: Uniform Resource Identifier

## Claims

1. A method, comprising:
establishing, at an egress node of a network, a media path of an emergency call between an ingress node of the network and the egress node, said emergency call entering the network via the ingress node and leaving the network via the egress node;
determining that a conference call corresponding to the media path is being invoked by receiving a message from a primary public safety answer point indicating that a conference node is to be contacted;
contacting, by the egress node, the indicated conference node to establish the conference call by forwarding the message toward the conference node;
establishing the conference call, while maintaining intact a session initiation protocol, SIP, signaling path and the media path of the emergency call until the egress node, in order to maintain an emergency call state control function in the conference call, even after a primary public safety answer point is dropped from the call;
establishing a call from the conference node to a secondary public safety answer point;
dropping off from the conference, by the primary public safety answer point, to initiate a call tranfer to the secondary public safety answer point;
dropping the conference, by the conference node, to achieve the call transfer of the emergency call from the primary public safety answer point to the secondary public safety answer point.

2. The method of claim 1, wherein the establishing the conference call comprises replacing a path to a primary public safety answer point with a path passing through the egress node and the conference node.

3. The method of claim 1, wherein the ingress node comprises an interconnect border control function, border gateway function, or legacy network gateway.

4. The method of claim 1, wherein the egress node comprises an interconnect border control function or border gateway function.

5. The method of claim 1, wherein the conference node comprises at least one of an application server, a multimedia resource function controller, or a multimedia resource function processor.

6. A system, comprising:
means for establishing, at an egress node of a network, a media path of an emergency call between an ingress node of the network and the egress node, said emergency call entering the network via the ingress node and leaving the network via the egress node;
means for determining that a conference call corresponding to the media path is being invoked by receiving a message from a primary public safety answer point indicating that a conference node is to be contacted;
means for contacting, by the egress node, the indicated conference node to establish the conference call by forwarding the message toward the conference node;
means for establishing a call from the conference node to a secondary public safety answer point, while maintaining intact a session initiation protocol, SIP, signaling path and the media path of the emergency call until the egress node, in order to maintain an emergency call state control function in the conference call, even after a primary public safety answer point is dropped from the call;
means for dropping off from the conference, by the primary public safety answer point, to initiate a call tranfer to the secondary public safety answer point;
means for dropping the conference, by the conference node, to achieve the call transfer of the emergency call from the primary public safety answer point to the secondary public safety answer point.

7. The system of claim 6, wherein the establishing the conference call comprises replacing a path to a primary public safety answer point with a path passing through the egress node and the conference node.

8. The system of claim 6, wherein the ingress node comprises an interconnect border control function, border gateway function, or legacy network gateway.

9. The system of claim 6, wherein the egress node comprises an interconnect border control function or border gateway function.

10. The system of claim 6, wherein the conference node comprises at least one of an application server, a multimedia resource function controller, or a multimedia resource function processor.

11. A computer program product encoding instructions for performing a process, the process comprising the method according to any of claims 1-5.

## Patentansprüche

1. Verfahren, das Folgendes umfasst:
Einrichten eines Medienpfads eines Notfallanrufs durch einen Ausgangsknoten eines Netzwerks zwischen einem Eingangsknoten des Netzwerks und dem Ausgangsknoten, wobei der Notfallanruf via den Eingangsknoten in das Netzwerk eintritt und via den Ausgangsknoten das Netzwerk verlässt;
Bestimmen, dass ein Konferenzanruf, der dem Medienpfad entspricht, aktiviert wird, durch Empfangen einer Nachricht von einer primären Notrufzentrale, die anzeigt, dass ein Konferenzknoten zu kontaktieren ist;
Kontaktieren des angezeigten Konferenzknotens durch den Ausgangsknoten, um den Konferenzanruf durch Weiterleiten der Nachricht zum Konferenzknoten einzurichten;
Einrichten des Konferenzanrufs, während ein Sitzungsinitiierungsprotokoll(SIP)-Signalisierungspfad und der Medienpfad des Notfallanrufs bis zum Ausgangsknoten intakt gehalten werden, um eine Steuerfunktion für einen Notfallanrufstatus beim Konferenzanruf aufrechtzuerhalten, auch nachdem eine primäre Notrufzentrale aus dem Anruf getrennt wurde;
Einrichten eines Anrufs vom Konferenzknoten bei einer sekundären Notrufzentrale;
Trennen der primären Notrufzentrale von der Konferenz, um eine Anrufübergabe an die sekundäre Notrufzentrale zu initiieren;
Trennen der Konferenz durch den Konferenzknoten, um die Anrufübergabe des Notfallanrufs von der primären Notrufzentrale an die sekundäre Notrufzentrale zu erreichen.

2. Verfahren nach Anspruch 1, wobei das Einrichten des Konferenzanrufs das Ersetzen eines Pfads zu einer primären Notrufzentrale durch einen Pfad, der durch den Ausgangsknoten und den Konferenzknoten verläuft, umfasst.

3. Verfahren nach Anspruch 1, wobei der Eingangsknoten eine Interconnect-Border-Steuerfunktion, eine Border-Gateway-Funktion oder ein älteres Netzwerkgateway umfasst.

4. Verfahren nach Anspruch 1, wobei der Ausgangsknoten eine Interconnect-Border-Steuerfunktion oder eine Border-Gateway-Funktion umfasst.

5. Verfahren nach Anspruch 1, wobei der Konferenzknoten mindestens eines von einem Anwendungsserver, einer Multimediaressourcenfunktionssteuerung oder einem Multimediaressourcenfunktionsprozessor umfasst.

6. System, das Folgendes umfasst:
Mittel zum Einrichten eines Medienpfads eines Notfallanrufs durch einen Ausgangsknoten eines Netzwerks zwischen einem Eingangsknoten des Netzwerks und dem Ausgangsknoten, wobei der Notfallanruf via den Eingangsknoten in das Netzwerk eintritt und via den Ausgangsknoten das Netzwerk verlässt;
Mittel zum Bestimmen, dass ein Konferenzanruf, der dem Medienpfad entspricht, aktiviert wird, durch Empfangen einer Nachricht von einer primären Notrufzentrale, die anzeigt, dass ein Konferenzknoten zu kontaktieren ist;
Mittel zum Kontaktieren des angezeigten Konferenzknotens durch den Ausgangsknoten, um den Konferenzanruf durch Weiterleiten der Nachricht zum Konferenzknoten einzurichten;
Mittel zum Einrichten eines Anrufs vom Konferenzknoten bei einer sekundären Notrufzentrale, während ein Sitzungsinitiierungsprotokoll(SIP)-Signalisierungspfad und der Medienpfad des Notfallanrufs bis zum Ausgangsknoten intakt gehalten werden, um eine Steuerfunktion für einen Notfallanrufstatus beim Konferenzanruf aufrechtzuerhalten, auch nachdem eine primäre Notrufzentrale aus dem Anruf getrennt wurde;
Mittel zum Trennen der primären Notrufzentrale von der Konferenz, um eine Anrufübergabe an die sekundäre Notrufzentrale zu initiieren;
Mittel zum Trennen der Konferenz durch den Konferenzknoten, um die Anrufübergabe des Notfallanrufs von der primären Notrufzentrale an die sekundäre Notrufzentrale zu erreichen.

7. System nach Anspruch 6, wobei das Einrichten des Konferenzanrufs das Ersetzen eines Pfads zu einer primären Notrufzentrale durch einen Pfad, der durch den Ausgangsknoten und den Konferenzknoten verläuft, umfasst.

8. System nach Anspruch 6, wobei der Eingangsknoten eine Interconnect-Border-Steuerfunktion, eine Border-Gateway-Funktion oder ein älteres Netzwerkgateway umfasst.

9. System nach Anspruch 6, wobei der Ausgangsknoten eine Interconnect-Border-Steuerfunktion oder eine Border-Gateway-Funktion umfasst.

10. System nach Anspruch 6, wobei der Konferenzknoten mindestens eines von einem Anwendungsserver, einer Multimediaressourcenfunktionssteuerung oder einem Multimediaressourcenfunktionsprozessor umfasst.

11. Computerprogrammprodukt, in dem Anweisungen zum Durchführen eines Prozesses codiert sind, wobei der Prozess das Verfahren gemäß einem der Ansprüche 1-5 umfasst.

## Revendications

1. Procédé comprenant les étapes consistant à :
établir, au niveau d'un nœud de sortie d'un réseau, un chemin multimédia d'un appel d'urgence entre un nœud d'entrée du réseau et le nœud de sortie, ledit appel d'urgence pénétrant dans le réseau via le nœud d'entrée et quittant le réseau via le nœud de sortie ;
déterminer qu'un appel de conférence correspondant au chemin multimédia est invoqué en recevant un message à partir d'un point de réponse de sécurité publique primaire indiquant qu'un nœud de conférence doit être contacté ;
contacter, par le nœud de sortie, le nœud de conférence indiqué afin d'établir l'appel de conférence en transmettant le message au nœud de conférence ;
établir l'appel de conférence tout en maintenant intacts un chemin de signalisation de protocole d'initiation de session, SIP, et le chemin multimédia de l'appel d'urgence jusqu'au nœud de sortie, afin de maintenir une fonction de commande d'état d'appel d'urgence dans l'appel de conférence, même après l'abandon d'un point de réponse de sécurité publique primaire dans l'appel ;
établir un appel provenant du nœud de conférence vers un point de réponse de sécurité publique secondaire ;
se retirer de la conférence, par le point de réponse de sécurité publique primaire, pour initier un transfert d'appel au point de réponse de sécurité publique secondaire ;
abandonner la conférence, par le nœud de conférence, pour obtenir le transfert d'appel de l'appel d'urgence, du point de réponse de sécurité publique primaire au point de réponse de sécurité publique secondaire.

2. Procédé de la revendication 1, dans lequel l'établissement de l'appel de conférence comprend le remplacement d'un chemin vers un point de réponse de sécurité publique primaire par un chemin passant par le nœud de sortie et le nœud de conférence.

3. Procédé de la revendication 1, dans lequel le nœud d'entrée comprend une fonction de commande de frontière d'interconnexion, une fonction de passerelle de frontière, ou une passerelle de réseau patrimonial.

4. Procédé de la revendication 1, dans lequel le nœud de sortie comprend une fonction de commande de frontière d'interconnexion ou une fonction de passerelle de frontière.

5. Procédé de la revendication 1, dans lequel le nœud de conférence comprend au moins l'un parmi un serveur d'application, un dispositif de commande de ressource multimédia, ou un processeur de fonction de ressource multimédia.

6. Système, comprenant :
des moyens pour établir, au niveau d'un nœud de sortie d'un réseau, un chemin multimédia d'un appel d'urgence entre un nœud d'entrée du réseau et le nœud de sortie, ledit appel d'urgence pénétrant dans le réseau via le nœud d'entrée et quittant le réseau via le nœud de sortie ;
des moyens pour déterminer qu'un appel de conférence correspondant au chemin multimédia est invoqué en recevant un message à partir d'un point de réponse de sécurité publique primaire indiquant qu'un nœud de conférence doit être contacté ;
des moyens pour contacter, par le nœud de sortie, le nœud de conférence indiqué afin d'établir l'appel de conférence en transmettant le message au nœud de conférence ;
des moyens pour établir un appel provenant du nœud de conférence vers un point de réponse de sécurité publique secondaire tout en maintenant intacts un chemin de signalisation de protocole d'initiation de session, SIP, et le chemin multimédia de l'appel d'urgence jusqu'au nœud de sortie, afin de maintenir une fonction de commande d'état d'appel d'urgence dans l'appel de conférence, même après l'abandon d'un point de réponse de sécurité publique primaire dans l'appel ;
des moyens pour se retirer de la conférence, par le point de réponse de sécurité publique primaire, pour initier un transfert d'appel au point de réponse de sécurité publique secondaire ;
des moyens pour abandonner la conférence, par le nœud de conférence, pour obtenir le transfert d'appel de l'appel d'urgence, du point de réponse de sécurité publique primaire au point de réponse de sécurité publique secondaire.

7. Système de la revendication 6, dans lequel l'établissement de l'appel de conférence comprend le remplacement d'un chemin vers un point de réponse de sécurité publique primaire par un chemin passant par le nœud de sortie et le nœud de conférence.

8. Système de la revendication 6, dans lequel le nœud d'entrée comprend une fonction de commande de frontière d'interconnexion, une fonction de passerelle de frontière, ou une passerelle de réseau patrimonial.

9. Système de la revendication 6, dans lequel le nœud de sortie comprend une fonction de commande de frontière d'interconnexion ou une fonction de passerelle de frontière.

10. Système de la revendication 6, dans lequel le nœud de conférence comprend au moins l'un parmi un serveur d'application, un dispositif de commande de ressource multimédia, ou un processeur de fonction de ressource multimédia.

11. Produit de programme informatique codant des instructions pour réaliser un processus, le processus comprenant le procédé selon l'une quelconque des revendications 1 à 5.
